(19) **Europäisches Patentamt European Patent Office Office européen des brevets**

(11) **EP 4 769 916 A1**

(12) **EUROPEAN PATENT APPLICATION**

(43) Date of publication:
**01.07.2026 Bulletin 2026/27**

(21) Application number: **25226780.2**

(22) Date of filing: **23.12.2025**

(51) International Patent Classification (IPC):
**H02K 33/04** (2006.01)     **G06F 3/01** (2006.01)

(52) Cooperative Patent Classification (CPC):
**G06F 3/016**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **27.12.2024 JP 2024232855**

(71) Applicant: **Minebea Mitsumi Inc.**
**Kitasaku-gun, Nagano 3890293 (JP)**

(72) Inventors:
• **SATO, Soichi**
  **206-8567 Tokyo (JP)**
• **KINOSHITA, Yosuke**
  **206-8567 (JP)**

(74) Representative: **Papula Oy**
**P.O. Box 981**
**00101 Helsinki (FI)**

(54) **VIBRATION ACTUATOR AND VIBRATION PRESENTATION APPARATUS**

(57)     A vibration actuator (10) includes: a first planar body (30) and a second planar body (32) that are magnetic bodies and are disposed to face each other; a third planar body (80) that is disposed between the first planar body (30) and the second planar body (32) and includes a magnetic body; a plate-shaped electromagnet part (20) that includes a magnetic pole part (34), a flat plate-shaped coil (50) surrounding the magnetic pole part (34), and a board part (40) connected to the flat plate-shaped coil (50), and that is disposed on one planar body (30) of the first planar body (30) and the third planar body (80) to face an other planar body (80) of the first planar body (30) and the third planar body (80); another electromagnet part (22) that is configured in the same manner as the plate-shaped electromagnet part (20) and is disposed on one planar body (32) of the second planar body (32) and the third planar body (80) to face an other planar body (80) of the second planar body (32) and the third planar body (80); and an elastic supporting part (60) that supports the third planar body (80) with respect to the first planar body (30) such that the third planar body (80) is movable in a facing direction, in which at least two of the first planar body (30), the second planar body (32), and the third planar body (80) are displaced to approach each other and vibrate by a magnetic force generated by energization of a plurality of the flat plate-shaped coils (50, 52).

FIG. 6

## Description

Technical Field

The present invention relates to a vibration actuator and a vibration presentation apparatus including the vibration actuator.

Background Art

Conventionally, a configuration is known in which a vibration actuator is used to provide a vibration as an operational tactile sensation (sensation of operating by touch) to an operator's finger pad or the like touching a display screen displayed on a touch panel that is a sensing panel (Patent Literature (hereinafter, referred to as "PTL") 1).
PTL 1 discloses a mobile terminal apparatus in which a vibration actuator is attached to a back surface of a touch panel via a vibration transmitter. In the vibration actuator of the apparatus, a mover is disposed to be movable back and forth along a guide shaft disposed to be perpendicular to the touch panel in a housing fixed to the vibration transmitter. The vibration actuator causes the mover to collide with the housing in response to an operation on the touch panel to impart the vibration to a fingertip in contact with the touch panel via the vibration transmitter.

Citation List

Patent Literature

PTL 1
Japanese Patent Application Laid-Open No. 2015-070729

Summary of Invention

Technical Problem

In the vibration actuator of PTL 1, since the guide shaft that guides the back and forth movement of the mover is disposed to be perpendicular to the display surface of the touch panel, the apparatus has a length perpendicular to the display surface, that is, a thickness. Therefore, in this configuration, a placement space of a predetermined thickness is required on a back surface side of the touch panel, and the mobile terminal apparatus including the touch panel itself is large, which causes a problem that the mobile terminal apparatus is difficult to be reduced in size and thickness.
With the reduction in size and thickness of such an apparatus, it has been desired to reduce the size and thickness of the vibration actuator mounted on the apparatus, and it has been desired to impart a wide variety of operational feels including a larger amplitude vibration to a user who operates the apparatus.
Objectives of the present invention include providing a vibration actuator and a vibration presentation apparatus that output suitable various vibrations to impart a wide variety of operational feels while achieving thinning.

Solution to Problem

In order to achieve the above objectives, a vibration actuator according to the present invention includes:

a first planar body and a second planar body that are magnetic bodies and are disposed to face each other;
a third planar body that is disposed between the first planar body and the second planar body and includes a magnetic body;
a plate-shaped electromagnet part that includes a magnetic pole part, a flat plate-shaped coil surrounding the magnetic pole part, and a board part connected to the flat plate-shaped coil, and that is disposed on one planar body of the first planar body and the third planar body to face an other planar body of the first planar body and the third planar body;
another electromagnet part that is configured in the same manner as the plate-shaped electromagnet part and is disposed on one planar body of the second planar body and the third planar body to face an other planar body of the second planar body and the third planar body; and
an elastic supporting part that supports the third planar body with respect to the first planar body such that the third planar body is movable in a facing direction, in which
at least two of the first planar body, the second planar body, and the third planar body are displaced to approach each other and vibrate by a magnetic force generated by energization of a plurality of the flat plate-shaped coils.

A vibration presentation apparatus according to the present invention includes:
the vibration actuator having the above configuration, the vibration actuator being disposed on a back surface of an operation surface and driven in response to an operation on the operation surface.

Advantageous Effects of Invention

According to the present invention, suitable various vibrations are output to impart a wide variety of operational feels, while achieving thinning.

Brief Description of Drawings

FIG. 1 is an external perspective view of a vibration actuator according to Embodiment 1 of the present invention;
FIG. 2 is a sub-assembly view of the vibration actuator;
FIG. 3 is a partially exploded view of the vibration actuator;
FIG. 4 is a sectional view taken along line A-A of FIG. 1;
FIG. 5 is a schematic sectional view showing a configuration of the principal part of the vibration actuator;
FIG. 6 is a schematic sectional view showing an example of an operation in the configuration of the principal part of the vibration actuator during energization;
FIG. 7 is a schematic sectional view showing an example of an operation in the configuration of the principal part of the vibration actuator during energization;
FIG. 8 is a schematic sectional view showing an example of an operation in the configuration of the principal part of the vibration actuator during energization;
FIG. 9 is a schematic sectional view showing an example of an operation in the configuration of the principal part of the vibration actuator during energization;
FIGS. 10A, 10B, and 10C are diagrams showing an example of an operation signal input to the coil;
FIG. 11 is a diagram for describing an example of an operation of the vibration actuator corresponding to the operation signal input to the plurality of coils;
FIGS. 12A, 12B, 12C, and 12D are schematic views showing an operation of the vibration actuator corresponding to the operation signal shown in FIG. 11;
FIGS. 13A, 13B, 13C, and 13D are schematic views showing an operation of the vibration actuator corresponding to the operation signal shown in FIG. 11;
FIGS. 14A and 14B are schematic views showing an operation of the vibration actuator corresponding to the operation signal shown in FIG. 11;
FIG. 15 is a sub-assembly view of a vibration actuator according to a variation of Embodiment 1 of the present invention;
FIG. 16 is a sub-assembly view of a vibration actuator according to Embodiment 2 of the present invention;
FIG. 17 is a sub-assembly view of a vibration actuator according to Embodiment 3 of the present invention;
FIGS. 18A and 18B are diagrams showing an attachment state of the vibration actuator to the vibration presentation apparatus;
FIG. 19 is an external perspective view of a vibration actuator according to Embodiment 4 of the present invention;
FIG. 20 is a sub-assembly view of the vibration actuator;
FIG. 21 is a schematic sectional view showing a configuration of the principal part of the vibration actuator;
FIG. 22 is a sub-assembly view of a vibration actuator according to Embodiment 5 of the present invention;
FIG. 23 is a schematic sectional view showing a configuration of the principal part of the vibration actuator according to Embodiment 5 of the present invention;
FIG. 24 is a schematic sectional view showing a configuration of the principal part of a vibration actuator according to Embodiment 6 of the present invention;
FIG. 25 is a diagram for describing an operation of a vibration presentation apparatus including the vibration actuator; and
FIG. 26 is a diagram showing a variation of the vibration presentation apparatus including the vibration actuator.

Description of Embodiments

Hereinafter, each embodiment of the present invention will be described in detail with reference to the drawings.
In each embodiment, the description will be made using an orthogonal coordinate system (X, Y, Z). The same orthogonal coordinate system (X, Y, Z) is used in the figures described below. Hereinafter, the lengths in the X-direction, the Y-direction, and the Z-direction correspond to a width, a depth, and a height of a vibration presentation apparatus (which may be referred to as an operation input apparatus) to which the vibration actuator is applied and which an operator touches to input information.

In addition, the positive Z-direction is a direction in which a vibration feedback is imparted to the operator, and is referred to as a "plane side" (or an "upper side"), and the negative Z-direction is a direction in which the operator presses the vibration actuator during the operation, and is referred to as a "bottom surface side" (or a "lower side"). In addition, the term "radial direction" is synonymous with an XY-direction around a central axis along the Z-direction in the coil of the vibration actuator, and is also referred to as a direction along the plate surface. In components constituting the vibration actuator, a surface on the "plane side" (or the "upper side") is referred to as a "front surface" (or an "upper surface"), and a surface on the "bottom surface side" (or the "lower side") is referred to as a "back surface" (or a "lower surface"). The above-described definitions are to be changed and interpreted in accordance with a change in the orientation of the vibration actuator or the vibration presentation apparatus in a case where the orientation of the vibration actuator or the vibration presentation apparatus is changed. In addition, the above-described definitions are changed and interpreted in accordance with the orientation of the vibration actuator in a case where the vibration actuator is mounted on the vibration presentation apparatus.

(Embodiment 1)

<Overall configuration of vibration actuator 10>

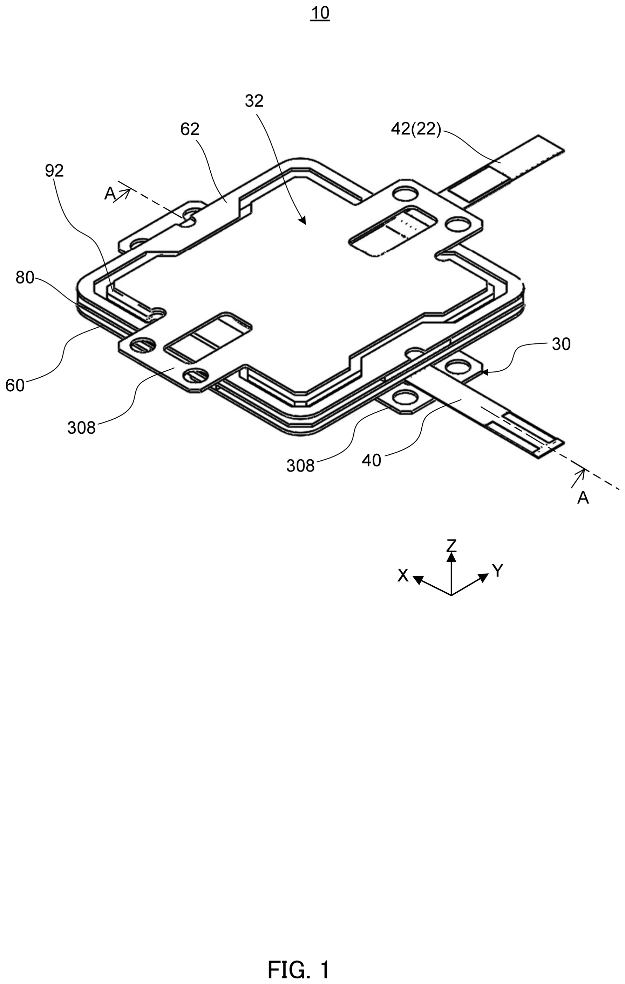

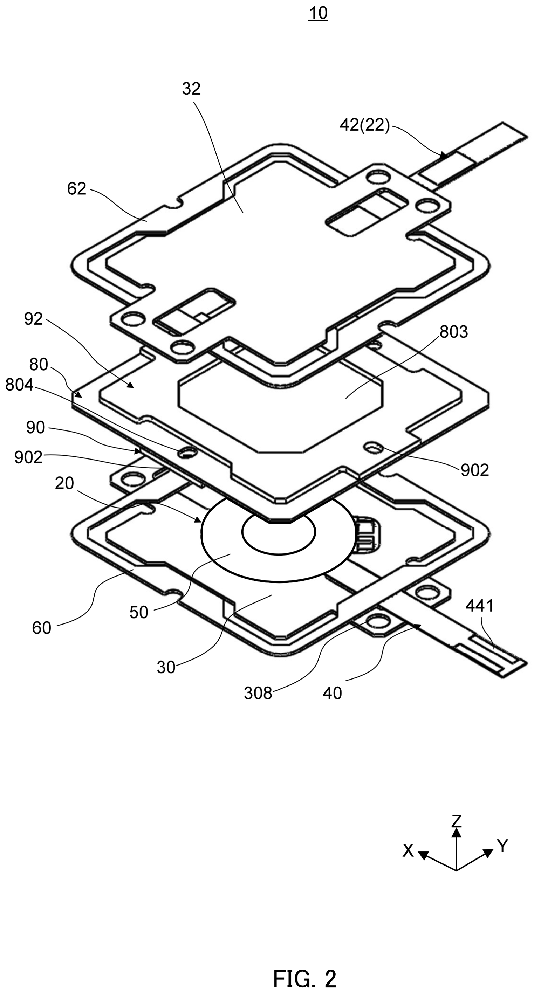

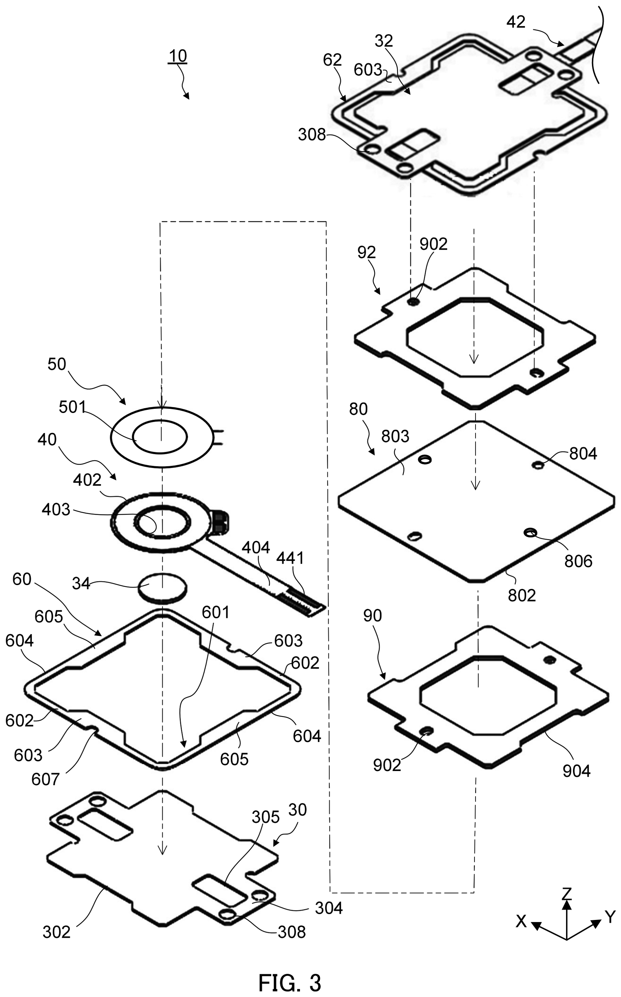

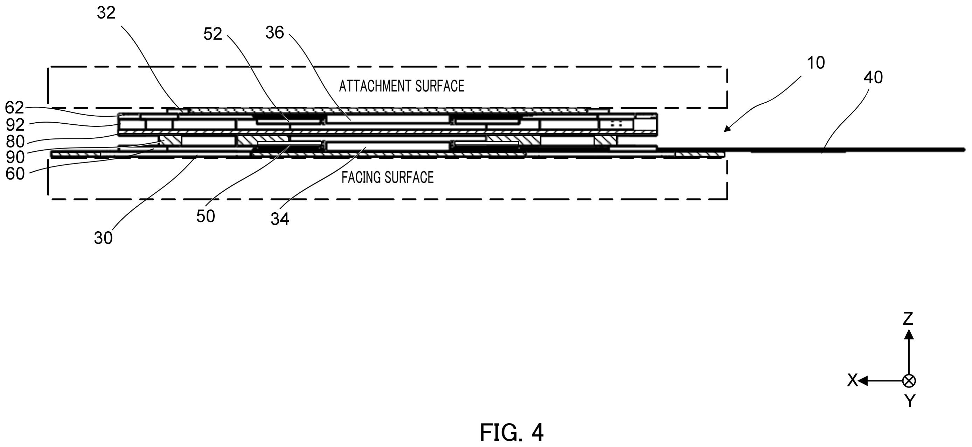

FIG. 1 is an external perspective view of a vibration actuator according to Embodiment 1 of the present invention, and FIG. 2 is a sub-assembly view of the vibration actuator. In addition, FIG. 3 is a partially exploded view of the vibration actuator, and FIG. 4 is a sectional view taken along line A-A of FIG. 1.

Vibration actuator 10 according to the present embodiment is a small and thin vibration actuator capable of obtaining various vibrations by using a plurality of electromagnet parts (coils and cores).

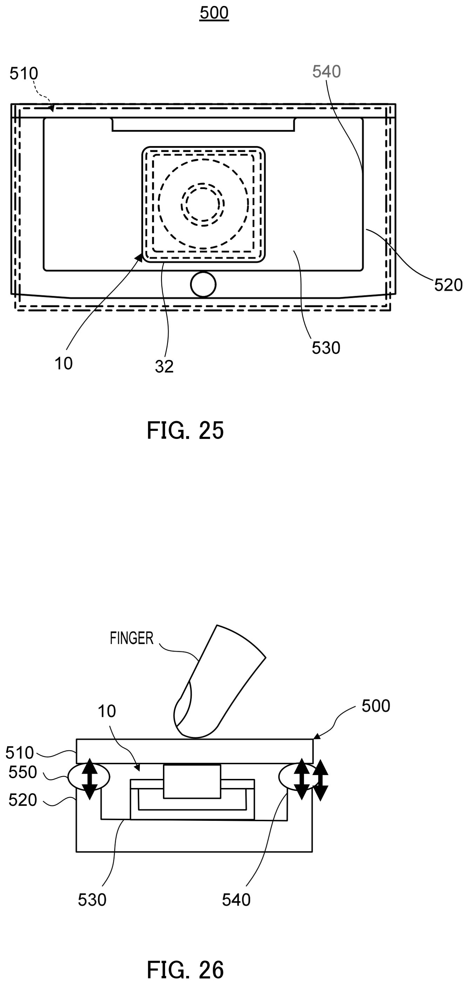

Vibration actuator 10 is used in, for example, vibration presentation apparatus 500 (see a trackpad shown in FIG. 25) including operation equipment (see pad body 510 shown in FIG. 25 in the present embodiment) as an operation surface (vibration presentation section) on which the operator performs a touch operation.

Vibration actuator 10 can cause the operation equipment to vibrate to impart a tactile operational feel (also referred to as a "tactile sensation" or a "force sensation") to the operator who performs the touch operation, in accordance with the use or usage of the operation equipment.

Vibration actuator 10 is a flat plate or thin plate-shaped thin vibration actuator, and the Z-direction and the -Z-direction are defined as a thickness direction, and a surface normal direction of a planar vibration actuator. Vibration actuator 10 is disposed on a back surface side of the operation equipment in the thickness direction (surface normal direction) to vibrate the operation equipment.

Vibration actuator 10 includes magnetic core (first planar body) 30, elastic supporting part 60, electromagnet part 20, weight 90, magnetic yoke (third planar body) 80, weight 92, elastic supporting part 62, electromagnet part 22, and magnetic core (second planar body) 32. In vibration actuator 10, elastic supporting part 60, electromagnet part 20, weight 90, magnetic yoke 80, weight 92, elastic supporting part 62, electromagnet part 22, and magnetic core 32 are stacked on magnetic core 30 in this order.

Magnetic pole part 34, board part 40, and coil 50 constitute electromagnet part 20, and magnetic pole part 36, board part 42, and coil 52 constitute the other electromagnet part 22.

Each of electromagnet parts 20 and 22 is disposed between two planar bodies (between magnetic core 30 and magnetic yoke 80 or between magnetic core 32 and magnetic yoke 80).

Each of electromagnet parts 20 and 22, together with the two planar bodies, constitutes a vibration unit. In the plurality of vibration units, movable sections for magnetic cores 30 and 32 are constituted by the same magnetic yoke 80 and weights 90 and 92.

In vibration actuator 10, the vibration units can move magnetic core 30 and magnetic yoke 80 or magnetic core 32 and magnetic yoke 80 in the Z-direction, respectively, by energization to coils 50 and 52 and can generate the vibration by the movement.

In vibration actuator 10, electromagnet parts 20 and 22 attached to magnetic cores 30 and 32 are configured such that coils 50 and 52 face each other, and magnetic cores 30 and 32 are shifted by 90 degrees about the coil axis, and magnetic cores 30 and 32 sandwich the movable sections in the up-down direction.

Electromagnet part 22, magnetic core 32, magnetic pole part 36, board part 42, coil 52, elastic supporting part 62, and weight 92 have the same configuration as electromagnet part 20, magnetic core 30, magnetic pole part 34, board part 40, coil 50, elastic supporting part 60, and weight 90. Therefore, electromagnet part 20, magnetic core 30, magnetic pole part 34, board part 40, coil 50, elastic supporting part 60, and weight 90 will be described, and the detailed description of the same configuration will be omitted.

<Magnetic Core 30 (First Planar Body), Magnetic Core 32 (Second Planar Body)>

Magnetic core 30 is a flat plate-shaped magnetic body, and an outer edge portion of magnetic core 30 is disposed to be surrounded by elastic supporting part 60 on the outer side. Magnetic core 32 is formed in the same manner as magnetic core 30.

In the outer peripheral portion of magnetic core 30, cutout portions 302 that allow movable-part-side connection portions 603 of elastic supporting part 60 to pass through are formed in one set of opposite sides, and plate-shaped protruding portions 304 that protrude outward respectively from the other set of opposite sides are disposed on the other set of opposite sides.

Cutout portions 302 and the plate-shaped protruding portions 304 in magnetic core 30 are formed on the adjacent sides in the outer periphery of magnetic core 30.

Portions (core-side connection portions 605) of elastic supporting part 60 are fixed to plate-shaped protruding portions 304. Each of plate-shaped protruding portions 304 includes window portion 305 into which extending portion 404 of board part 40 is inserted to prevent interference with elastic supporting part 60, and fixing holes 308 that are fixed to a mounting target object (for example, a housing of a product) via a fastening member such as a screw. Cutout portions 302 and plate-shaped protruding portions 304 may be formed in and on only one of the opposite sides of each set of opposite sides. In addition, it can be said that the pair of plate-shaped protruding portions 304 supports elastic supporting part 60 symmetrically about coil 50.

Magnetic core 30 is formed of, for example, a magnetic material such as a silicon steel plate or an electrically zinc-plated steel plate (Steel Electrolytic Cold Commercial (SECC)). Magnetic core 30 also functions as a weight when used as the movable part.

<Electromagnet Part 20 (Magnetic pole part 34, Board Part 40, Coil 50)>

Electromagnet part 20 is formed in a thin plate shape, and includes magnetic pole part 34 that is magnetized in the thickness direction (Z-direction), coil 50, and board part 40. Electromagnet part 20 is disposed on magnetic core 30.

Magnetic pole part 34 is a flat magnetic body having a length in the radial direction longer than the thickness, and is formed in, for example, a disk shape. Magnetic pole part 34 is disposed integrally with magnetic core 30 by being connected to magnetic core 30 inside coil 50 on magnetic core 30. Magnetic pole part 34 constitutes a core of the electromagnet together with magnetic core 30.

Magnetic pole part 34 is magnetized together with magnetic core 30 by energization of coil 50, and the front and back surfaces thereof are magnetic pole surfaces through which magnetic fluxes flow in the up-down direction, that is, the thickness direction.

Coil 50 is formed in a flat annular shape having a length in the radial direction longer than the thickness. Coil 50 is disposed on magnetic core 30 via board part 40. Coil 50 is disposed to surround magnetic pole part 34, and the axis of coil 50 is disposed to coincide with the axis of magnetic pole part 34. Since coil 50 has an annular shape having no side portion in which a variation is likely to occur, coil 50 is manufactured with high productivity as a coil having stable characteristics.

Coil 50 may be configured in any manner as long as coil 50 is formed in a thin (flat) annular shape, and may be formed of, for example, polyurethane enameled copper wire (polyUrethane Enameled copper Wire (UEW)).

Coil 50 is connected to the interconnection of board part 40 by coil windings at both ends. Coil 50 may be a normal wound coil such as an air-core coil in which coil windings (UEW) at both ends are drawn from the inside of the annular coil body, or may be wound in a so-called alpha winding in which coil windings at both ends protrude from the outer periphery of the coil body.

Board part 40 supplies power via an interconnection portion connected to coil 50. Board part 40 is formed in a film shape. Board part 40 is, for example, a flexible board (FPC), and is configured by disposing copper, which is a conductive foil, on a polyimide (PI) film, and is designed to be low in elasticity to avoid an influence on the characteristics of the spring that is elastic supporting part 60.

Board part 40 includes board body 402 in which opening portion 403 is formed, and extending portion 404 that extends from a part of the outer periphery of board body 402. The interconnection portion is disposed across board body 402 and extending portion 404, and the interconnection portion connects coil 50 on board body 402 to land 441 at a distal end portion of extending portion 404. Coil 50 is electrically connected to an external apparatus via land 441.

Board body 402 is attached to the entire surface of magnetic core 30 in a state where magnetic pole part 34 is disposed in opening portion 403 on magnetic core 30. Opening portion 501 of coil 50 is positioned corresponding to opening portion 403. Board body 402 includes an insulating film, and functions as an insulator that is interposed between magnetic core 30 and coil 50 to insulate magnetic core 30 from coil 50.

Extending portion 404 is disposed to be inserted into window portion 305 and to extend to the outside along the lower surface of magnetic core 30. As a result, extending portion 404 extends across elastic supporting part 60 without interfering with elastic supporting part 60 connected to plate-shaped protruding portion 304, and is drawn to the outside of vibration actuator 10. In addition, since extending portion 404 is inserted into window portion 305, board part 40 is positioned with respect to magnetic core 30.

Since board part 40 is a flexible board (FPC) and has an insulating function and a conduction function (via the interconnection portion) to coil 50, it is possible to avoid a dielectric breakdown, to improve routing of the power-supply wiring to the coil, and to suppress coil wire breakage. In addition, in a case where the connection is made using a connector or the like, the connection can be easily made.

<Elastic Supporting Part 60>

Elastic supporting part 60 connects magnetic core 30 and magnetic yoke 80 to each other such that they are relatively movable, and elastically supports magnetic core 30 and magnetic yoke 80. Specifically, elastic supporting part 60 is disposed on the outside of coil 50 and connects magnetic core 30 to weight 90.

Elastic supporting part 60 has a predetermined thickness (thickness in the Z-direction) and is disposed in a layered manner between magnetic core 30 and weight 90 in the thickness direction (Z-direction). The predetermined thickness ensures a length of the relative movement between magnetic core 30 and magnetic yoke 80 (weight 90).

Elastic supporting part 60 is a flat plate-shaped frame-shaped body formed of SUS or the like and elastically deformed, and is, for example, a leaf spring.

Elastic supporting part 60 includes opening portion 601, is formed in a rectangular frame shape that surrounds magnetic core 30 and coil 50, is disposed on the outside of magnetic core 30, and is elastically deformed in the thickness direction (Z-direction) on the outside. That is, the frame-shaped portion formed by side portions 602 and 604 positioned on the outside of magnetic core 30 is elastically deformable in the Z-direction in elastic supporting part 60. Elastic supporting part 60 causes magnetic core 30 and weight 90, in other words, magnetic core 30 and magnetic yoke 80 to approach and separate from each other by deforming the frame-shaped portion, specifically, by deformation causing magnetic core 30 and weight 90 to approach each other.

Elastic supporting part 60 includes movable-part-side connection portion 603 on each of the pair of side portions 602 that are parallel to each other, and movable-part-side connection portions 603 join weight 90 fixed to magnetic yoke 80 in a stacked manner in the Z-direction. Specifically, movable-part-side connection portions 603 of elastic supporting part 60 are connected to movable-part joining portions 902 of weight 90, and the weight is suspended between movable-part-side connection portions 603 of the pair of side portions 602. As a result, since elastic supporting part 60 elastically supports the movable part side at a pair of portions of the opposite sides, elastic supporting part 60 can support the movable part side in a balanced manner and can vibrate the movable part side stably.

In addition, elastic supporting part 60 includes core-side connection portion 605 on each of the pair of side portions 604 adjacent to the pair of side portions 602, and core-side connection portions 605 are joined to plate-shaped protruding portions 304 of magnetic core 30 in a stacked manner in the Z-direction. Elastic supporting part 60 is connected to magnetic core 30 by a plurality of core-side connection portions 605 that protrude inward from portions of the frame-shaped body spaced from each other by equal distances, and is connected to weight 90 by movable-part-side connection portions 603 that are portions spaced from core-side connection portions 605 by equal distances.

Movable-part-side connection portions 603 and core-side connection portions 605 are plate-shaped portions (plate-shaped pieces) that protrude inward from side portions 602 and 604 constituting the frame-shaped portion of elastic supporting part 60. Movable-part-side connection portions 603 and core-side connection portions 605 make surface contact with and connected to movable-part joining portions 902 and plate-shaped protruding portions 304, respectively, in the Z-direction at the side portions of elastic supporting part 60 facing each other.

Movable-part-side connection portions 603 and core-side connection portions 605 are disposed at positions rotated by 90 degrees with respect to each other in rectangular frame-shaped elastic supporting part 60, and are configured to have the same length and the same width. As a result, it is not necessary to determine the orientation of elastic supporting part 60 during the assembly, and the assemblability can be improved.

In addition, since elastic supporting part 60 is a frame-shaped body, the spring length can be increased and stable assemblability can be ensured. In addition, since elastic supporting part 60 has an integral structure, the component accuracy can be increased.

Elastic supporting part 60 is disposed between weight 90 and magnetic core 30. This space, that is, the thickness of elastic supporting part 60 is a gap between weight 90 and electromagnet part 20, that is, a gap that defines a maximum movable range of magnetic yoke 80. The thickness of each member means a "length in the Z-direction". Since elastic supporting part 60, weight 90, and magnetic pole part 34 are disposed between magnetic core 30 and magnetic yoke 80, which are flat plates, the gap is set to, for example, the thickness of weight 90 + the thickness of elastic supporting part 60 - the thickness of magnetic pole part 34.

Elastic supporting part 60 is deformed in a layer between magnetic core 30 and weight 90. Elastic supporting part 60 supports weight 90 and electromagnet part 20 such that they are movable to approach from one to the other in a balanced manner in a state where they are perpendicular to a facing direction (vibration direction).

In addition, as shown in FIG. 4, since elastic supporting part 60 is positioned in substantially the same layer as coil 50 and magnetic pole part 34, the thickness can be reduced as compared with a configuration in which elastic supporting part 60 is stacked on coil 50 and magnetic pole part 34, and the entire apparatus can be thinned. Elastic supporting part 60 is disposed at a position where it does not interfere with magnetic core 30, on which coil 50 and magnetic pole part 34 are disposed, and is deformed to displace in the Z-direction.

In addition, for example, in a case where the movable part is movable with respect to electromagnet part 20, elastic supporting part 60 can determine the amount of displacement and the natural frequency of the movable part by setting a spring constant $K_{sp}$, and can also adjust the resonance frequency. In addition, the movable part is driven (moved) to generate a mechanical tactile sensation by generating a displacement during energization of coil 50.

<Weight 90>

Weight 90 is for increasing the weight of the movable part and ensuring the gap that is the movable region of elastic supporting part 60. Weight 90 is disposed on lower surface 802 of magnetic yoke 80, has a predetermined length (thickness) in the up-down direction, and separates magnetic yoke 80 from electromagnet part 20 in the up-down direction.

Weight 90 is a frame-shaped plate body and is formed in, for example, a rectangular frame shape. Weight 90 is attached to lower surface 802 of magnetic yoke 80 and is joined to elastic supporting part 60 via movable-part joining portions 902 of a pair of parallel opposite sides. Each of movable-part joining portions 902 includes a hole for connecting to elastic supporting part 60 and is formed to protrude to the outside at each of a pair of opposite sides.

Weight 90 is suspended between movable-part-side connection portions 603 by connecting movable-part joining portions 902 of weight 90 to movable-part-side connection portions 603 of elastic supporting part 60, and elastic supporting part 60 is connected to weight 90 to be deformable on outer peripheral side of weight 90.

Weight 90 includes recessed portions 904 on portions of a pair of opposite side portions different from the pair of opposite sides on which movable-part joining portions 902 are formed. Recessed portions 904 prevent interference with core-side connection portions 605 of elastic supporting part 60 that moves in the up-down direction (Z-direction).

As shown in FIG. 4, weight 90 is formed in, for example, a square frame body corresponding to an outer shape of magnetic yoke 80. Weight 90 is interposed between magnetic yoke 80 and elastic supporting part 60.

Weight 90 has a shape that avoids coil 50 in a case where magnetic yoke 80 is displaced by the deformation of elastic supporting part 60. Weight 90 is disposed on the outside of magnetic pole part 34 and coil 50 at a position surrounding a portion (central portion of lower surface 802 facing magnetic pole part 34) of magnetic yoke 80 that is a magnetic pole surface.

Weight 90 separates magnetic yoke 80 and magnetic core 30 by a length (thickness) in the up-down direction. The thickness of weight 90, together with elastic supporting part 60 and magnetic pole part 34, forms a spacing (gap) between, on one hand, magnetic yoke 80 and, on the other hand, coil 50 and magnetic pole part 34.

As a result, elastic supporting part 60 can move to the same layer as magnetic core 30, and the movable region is increased, so that the movable region of the movable part in vibration actuator 10 can be sufficiently set, and suitable vibration characteristics can be obtained. The air gap is also formed in the same manner in the vibration unit in each embodiment described below.

Weight 90 has a predetermined thickness that is a part of the deformation region of elastic supporting part 60, and separates elastic supporting part 60 from magnetic yoke 80 in the thickness direction (Z-direction). In addition, weight 90 separates electromagnet part 20, that is, magnetic core 30, coil 50, and magnetic pole part 34 from magnetic yoke 80 in the vibration direction (up-down direction, Z-direction).

Weight 90 is formed of a high-precision steel sheet using, for example, an austenitic stainless steel strip for springs produced by cold rolling. Weight 90 is a non-magnetic material, but may be formed of any of a magnetic material or a non-magnetic material, and can form a magnetic circuit of vibration actuator 10.

Weight 90 can increase the degree of freedom of the elastic member such as the leaf spring used for elastic supporting part 60 in accordance with the design also in each embodiment.

Since weight 90 is formed of a plate material, a plate material having a thickness in which an accurate dimension is easily set can be used, and the accuracy of the gap can be improved. In addition, weight 90 may be configured using a high-specific-gravity material, in which case the mass of the movable part increases and the generated vibration can be increased. In addition, in a case where weight 90 is used as the weight of the movable part, the weight can be adjusted to set the natural frequency of the movable part.

<Magnetic Yoke (Third Planar Body) 80>

Magnetic yoke 80 is disposed to face electromagnet part 20 and is provided to be movable in a direction of approaching with respect to electromagnet part 20. Magnetic yoke 80 is provided integrally with weight 90 and functions as the movable part with respect to magnetic core 30. The vibration actuator generates the vibration by the movement of

7

magnetic yoke 80.

Magnetic yoke 80 faces, by lower surface 802, magnetic pole part 34 and coil 50 from above. Magnetic yoke 80 is a planar body formed in a rectangular plate shape, and is formed as, for example, a planar body having a square shape in plan view. Magnetic yoke 80 is joined to elastic supporting part 60 by fixing portions 804 formed at central portions of a pair of facing side portions, together with weight 90 (movable-part joining portion 902) at lower surface 802.

Magnetic yoke 80 faces magnetic pole part 34 in a surface-to-surface manner, and is attracted to magnetic pole part 34 by a magnetic attractive force (magnetic force) generated between magnetic pole part 34 and magnetic yoke 80 by energization of coil 50. Magnetic yoke 80 is disposed to face magnetic core 30 and is attracted to magnetic core 30 by a magnetic attractive force generated between magnetic core 30 and the outer peripheral portion of magnetic pole part 34.

Magnetic yoke 80 is formed of one plate-shaped magnetic body and has a high planarity. Magnetic yoke 80 may be formed of, for example, a soft magnetic material such as a silicon steel plate, a permalloy, or a ferrite. In addition, magnetic yoke 80 may be formed of electromagnetic stainless steel, a sintered material, a metal injection molded (MIM) material, a laminated steel plate, an electrically zinc-plated steel plate (Steel Electrolytic Cold Commercial (SECC)), or the like. Magnetic yoke 80 is particularly preferably formed of a silicon steel plate or SECC.

Since magnetic yoke 80 is a flat plate-shaped body having a high planarity, magnetic yoke 80 can be disposed to face the entire magnetic pole surface of magnetic pole part 34 with a uniform gap, the accuracy of the gap surface can be improved, and the magnetic attractive force between the magnetic yoke and electromagnet part 20 can be effectively exhibited.

Magnetic yoke 80 can adjust an air flow passage through which air flows in an inner space by changing the shape of magnetic yoke 80.

In addition, magnetic yoke 80, together with weight 92 on upper surface 803, is connected to elastic supporting part 62 by central fixing portions 806 formed in the other pair of side portions.

<Weight 92, Board Part 42, Elastic Supporting Part 62, And Magnetic Core 32>

The assembly of weight 92, board part 42, elastic supporting part 62, electromagnet part 22, and magnetic core 32 is the same assembly as the assembly of weight 90, board part 40, elastic supporting part 60, electromagnet part 20, and magnetic core 30, and is configured by stacking on one another similarly from the magnetic core 32 side.

Weight 92, board part 42, elastic supporting part 62, electromagnet part 22, and magnetic core 32 are disposed to be symmetrical to weight 90, board part 40, elastic supporting part 60, electromagnet part 20, and magnetic core 30 in the up-down direction with respect to magnetic yoke 80. In addition, weight 92, board part 42, elastic supporting part 62, electromagnet part 22, and magnetic core 32 are disposed in a state of being rotated by 90 degrees about the central axis of vibration actuator 10.

Specifically, weight 92 is disposed on upper surface 803 of magnetic yoke 80 in an orientation rotated by 90 degrees about the central axis of vibration actuator 10 with respect to weight 90, and is fixed by fixing portions 806 via movable-part joining portions 902. Movable-part joining portions 902 of weight 92 are fixed to a pair of opposite sides adjacent to the pair of opposite sides to which movable-part joining portions 902 of weight 90 are joined.

Elastic supporting part 62 is disposed on weight 92 and is connected to movable-part-side connection portions 603 of elastic supporting part 62 by movable-part joining portions 902.

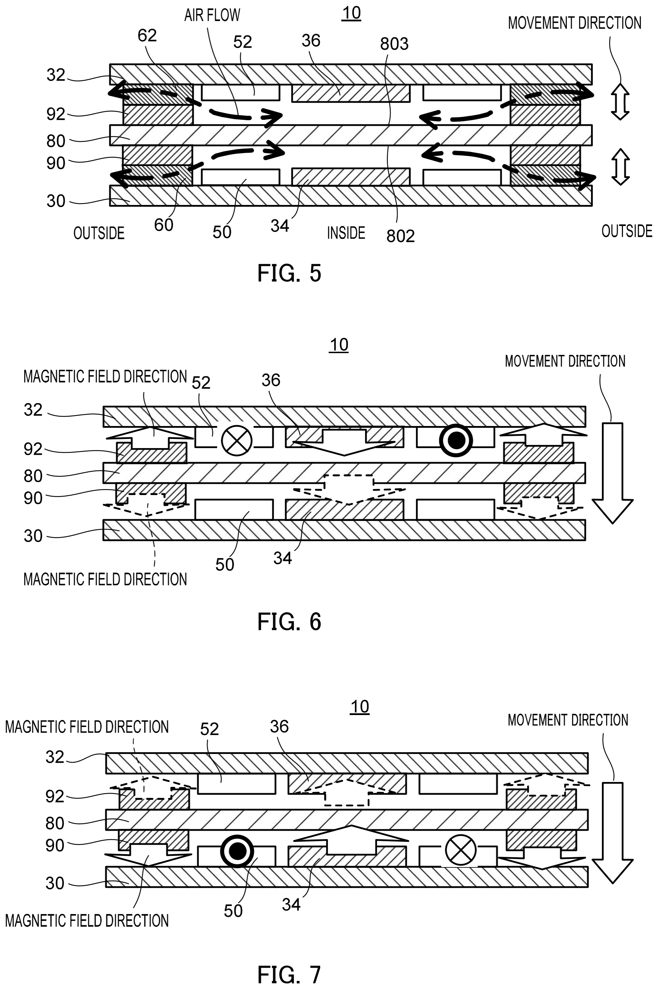

Similarly to elastic supporting part 60, magnetic core 32 on which coil 52 and magnetic pole part 36 (see FIGS. 4 and 5) are disposed is connected to elastic supporting part 62.

<Operation of Vibration Actuator 10>

FIG. 5 is a diagram for describing the operation of the vibration actuator. In vibration actuator 10, in a non-energized state, a magnetic attractive force is generated between, on one hand, magnetic pole parts 34 and 36 and magnetic cores 30 and 32 and, on the other hand, magnetic yoke 80 by energization of coils 50 and 52. As a result, magnetic yoke 80 and magnetic core 32 are movable to approach or separate from magnetic core 30.

Magnetic core 32 is movable only with respect to magnetic yoke 80 and is movable to the magnetic core 30 side together with magnetic yoke 80.

In a case where magnetic yoke 80 and magnetic core 32 move, the amount of air in the inner space between magnetic core 30 and magnetic yoke 80 and the inner space between magnetic yoke 80 and magnetic core 32 fluctuates (see black arrow) in vibration actuator 10.

In a case where magnetic core 30 and magnetic yoke 80 approach each other or magnetic yoke 80 and magnetic core 32 approach each other, the air in the inner space between magnetic core 30 and magnetic yoke 80 or the inner space between magnetic yoke 80 and magnetic core 32 is compressed. The compressed air is released to the outside (indicated by a black arrow direction). By adjusting the amount of the released compressed air, vibration actuator 10 can attenuate the vibration.

In addition, in a case where magnetic core 30 and magnetic yoke 80 are separated from each other or magnetic yoke 80 and magnetic core 32 are separated from each other, air flows from the outside into the inner space between magnetic core 30 and magnetic yoke 80 or the inner space between magnetic yoke 80 and magnetic core 32. As a result, the compressed state of the air in the inner space is released.

<Exemplary Operation of Vibration Actuator>

FIGS. 6 to 9 are schematic sectional views showing an example of an operation in the configuration of the principal part of the vibration actuator during energization.

In vibration actuator 10, the magnetic attractive force in the magnetic circuit is increased by using a plurality of coils 50 and 52. In addition, since vibration actuator 10 uses a plurality of elastic supporting parts 60 and 62 (for example, leaf springs), vibration actuator 10 is a multi-resonance actuator having two or more resonance points by setting a spring constant and a movable part weight described below.

<One of Vibration Units Is Movable (One Coil Is Energized)>

In the vibration actuator, for example, as shown in FIG. 6, in a case where coil 52 on the movable part side is energized to move vibration actuator 10, a magnetic field direction is formed from magnetic pole part 36 toward magnetic yoke 80, and a magnetic flux flows. As a result, magnetic yoke 80 is attracted to upper magnetic pole part 36 (indicated by a central solid arrow).

In addition, a magnetic flux flows from weight 92 on magnetic yoke 80 to magnetic core 32 (solid arrows on the left and right). As a result, weight 92 is attracted to magnetic core 32. In this case, a magnetic flux (broken line arrow) also flows to the magnetic pole part 34 side and the magnetic core 30 side via magnetic yoke 80 and weight 90, and a magnetic attractive force is generated between them.

By energizing coil 52 on the movable-part-side in this way, the movable part on magnetic core 30 that functions as a fixing part moves toward magnetic core 30.

This is because magnetic core 32 and magnetic yoke 80 move to approach magnetic core 30 regardless of the energization direction of coil 52. That is, at least two planar bodies of magnetic core (first planar body) 30, the magnetic core (second planar body), and magnetic yoke (third planar body) 80 are displaced to approach each other and vibrate by the magnetic force generated by energizing the plurality of coils 50 and 52.

In a case where the magnetic attraction state is released, magnetic core 32 and magnetic yoke 80 are displaced in a direction of being separated from magnetic core 30.

In addition, in vibration actuator 10, for example, as shown in FIG. 7, in a case where coil 50 on the fixing part side is energized to move vibration actuator 10, a magnetic field direction is formed from magnetic pole part 34 toward magnetic yoke 80, and a magnetic flux flows. That is, magnetic yoke 80 approaches magnetic pole part 34 to be close to magnetic pole part 34 by the magnetic attractive force generated from magnetic pole part 34 (see center solid arrow). Magnetic yoke 80 generates a magnetic pole due to the influence, and a magnetic flux flows to magnetic core 32, and magnetic core 32 approaches magnetic yoke 80 to be close to magnetic yoke 80 (see center broken line arrow). In addition, a magnetic flux flows from weight 90 located below magnetic yoke 80 to magnetic core 30 (solid arrows on the left and right). As a result, weight 92 is attracted to magnetic core 32. In this case, a magnetic flux (broken line arrow) also flows to the magnetic pole part 34 side and the magnetic core 30 side via magnetic yoke 80 and weight 90, and a magnetic attractive force is generated between them.

Magnetic yoke 80 and magnetic core 32 move to approach magnetic core 30 regardless of the energization direction of coil 50 on the fixing part side. In a case where the magnetic attraction state is released, magnetic core 32 and magnetic yoke 80 are displaced in a direction of being separated from magnetic core 30.

<Both Vibration Units Are Movable (Both Coils Are Energized)>

A case where both vibration units are energized for driving in vibration actuator 10 will be described. In a case where both vibration units are driven, both coils 50 and 52 are energized.

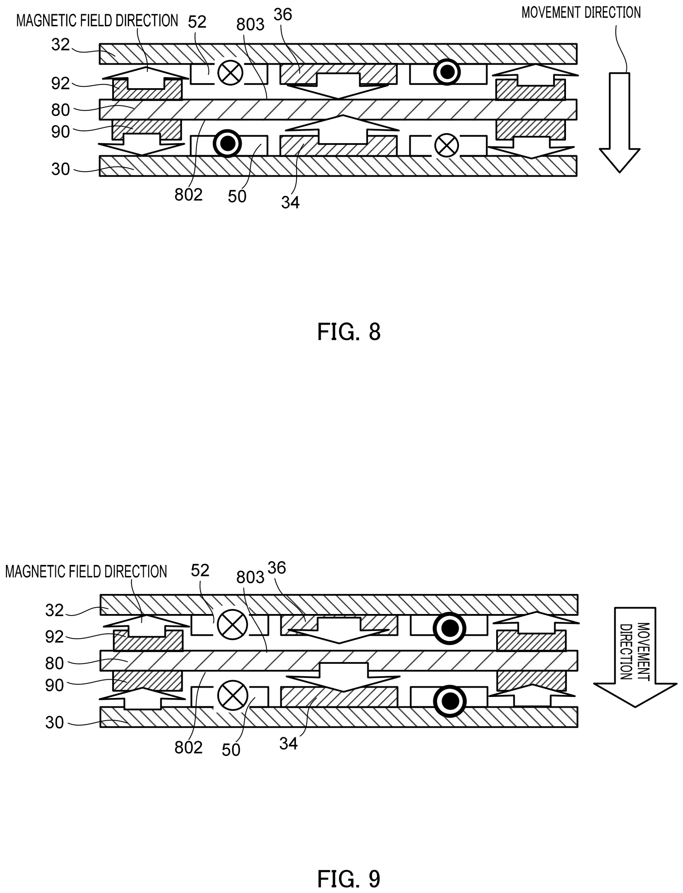

In vibration actuator 10, for example, as shown in FIG. 8, even in a case where the energization directions of coils 50 and 52 are different, a magnetic field toward magnetic yoke 80 is generated from magnetic pole parts 34 and 36 inside coils 50 and 52 disposed above and below magnetic yoke 80.

Accordingly, a magnetic field from weight 90 located below magnetic yoke 80 toward magnetic core 30 is also generated, and a magnetic field from weight 92 located above magnetic yoke 80 toward magnetic core 32 is also generated.

As a result, magnetic core 32 and magnetic yoke 80, which serve as the movable part, move (move) to the magnetic core 30 side on the fixing part side.

In the driving method by the energization, the magnetic field directions from magnetic cores 30 and 32 to magnetic yoke 80 are of the same polarity (for example, the N pole), and the magnetic fields collide with magnetic yoke 80 and the magnetic fluxes spread along upper and lower surfaces 803 and 802 of magnetic yoke 80.

Therefore, weights 90 and 92, which are the magnetic bodies disposed at the outer peripheral portion of magnetic yoke 80, can generate the magnetic attractive force over the entire surface of magnetic yoke 80 by reducing the gap with opposed magnetic cores 30 and 32. As a result, it is possible to suppress a phenomenon in which the structural member is deformed during driving due to a decrease in rigidity due to thinning.

As shown in FIG. 9, in a case where the energization directions of coils 50 and 52 in vibration actuator 10 are the same, magnetic fields toward magnetic yoke 80 are generated from magnetic pole parts 34 and 36 inside coils 50 and 52 disposed above and below magnetic yoke 80. Accordingly, upper and lower surfaces 803 and 802 of magnetic yoke 80 are confronted by magnetic poles of opposite polarity.

For example, magnetic pole part 34 on magnetic core 30 is the S pole, and magnetic pole part 36 of magnetic core 32 is the N pole. In addition, a magnetic flux from magnetic core 30 flows to weight 90 located below magnetic yoke 80, and a magnetic field is generated from weight 92 located above magnetic yoke 80 toward magnetic core 32.

In this energization, since the magnetic poles collide with each other on the front and back surfaces of magnetic yoke 80, the magnetic fluxes are concentrated on the surfaces of magnetic pole parts 34 and 36, and a stronger magnetic attractive force can be generated. As a result, magnetic core 32 and magnetic yoke 80, which are the movable parts, move (move) to the magnetic core 30 side as the fixing part side.

In the vibration actuator 10, in a case where magnetic core 32 serves as the fixing part, magnetic core 30 together with magnetic yoke 80 constitutes the movable part. The movement direction by the energization of coils 50 and 52 is opposite to the direction of FIG. 9. Magnetic core 30 moves together with magnetic yoke 80 to the magnetic core 32 side.

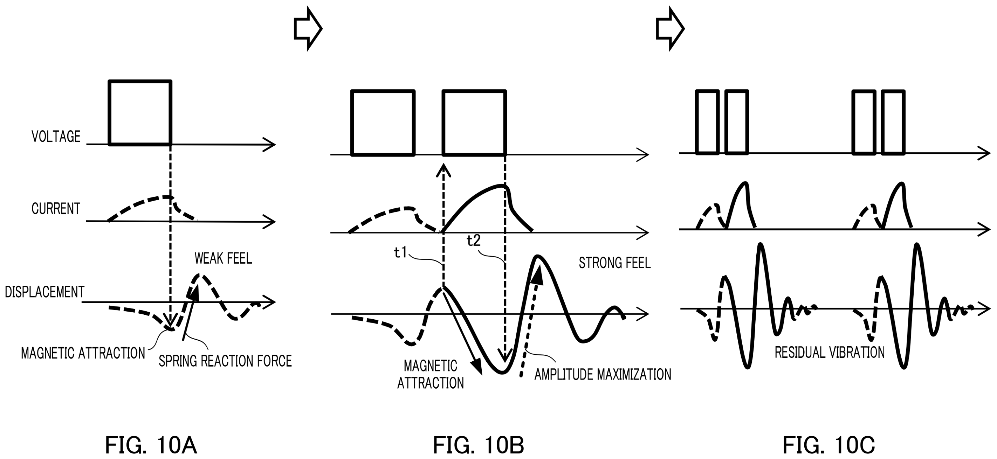

FIGS. 10A, 10B, and 10C are diagrams showing an example of an operation signal input to the coils. In FIGS. 10A, 10B, and 10C, the voltage, the current, and the displacement correspond to each other, and the displacement is a displacement of the movable part (magnetic yoke 80 or magnetic core 32) by the supplied drive current pulse.

In a case of controlling the vibration in vibration actuator 10, the vibration may be controlled by inputting the pulse signal to coils 50 and 52.

For example, the signals shown in FIGS. 10A to 10C are diagrams showing an example of controlling the vibration actuator by the pulse signal. In particular, FIG. 10C is an example of a signal supplied to shorten the attenuation period of the vibration by the main drive pulse.

FIG. 10A shows the behavior of the vibration actuator in a case where one drive current pulse is input. In a case where the one pulse signal is input to the coils, magnetic pole parts 34 and 36 are excited via the coils, and the movable part of magnetic yoke 80 or magnetic core 32 is displaced downward by the magnetic attractive force.

Next, at the timing of the current turn-off, the magnetic attractive force is released, and the movable part is displaced upward by the reaction force of the elastic supporting part (spring). As a result, the object vibrates. The tactile sensation imparted to the user by this vibration is referred to as a weak feel.

FIG. 10B shows the behavior of the vibration actuator in a case where two drive current pulses are input. In this control, the first pulse is input, and the second pulse is input at the timing of the maximum displacement of the movable part by the first pulse input. Accordingly, the amplitude (G value) of the movable part is increased, and the amplitude is maximized. As a result, a more powerful vibration can be imparted, and the tactile sensation can be presented. FIG. 10C shows the input of two sets of two drive current pulses to the coil.

After inputting the first two pulses to maximize the amplitude of the movable part, the second two drive current pulse are input during the residual vibration following current turn-off. This interrupts the residual vibration and imparts a crisp feel. As a result, the drive current pulse of FIG. 10C functions as a brake pulse signal, and the vibration by the current pulse is attenuated.

Thus, various variations of the vibration can be provided. Further, since each signal can be input to each of the plurality of coils 50 and 52, more various vibrations can be further generated, and for example, various tactile sensations can be presented.

Vibration actuator 10 realizes vibration actuator 10 that can generate various vibrations while reducing the cost by using a plurality of the same component configurations for the movable part weight, reinforcing the magnetic circuit, improving the control method, and the like. In addition, in a case where magnetic yoke 80 is the movable part, the spring constant can be increased with an increase in the movable part weight.

In vibration actuator 10, the flexible board that is board part 40 is configured to be pulled out from magnetic core 30 attached to the facing surface. As a result, in a case where the connection destination is the facing surface, the flexible board does not hinder the movement of the movable section during driving.

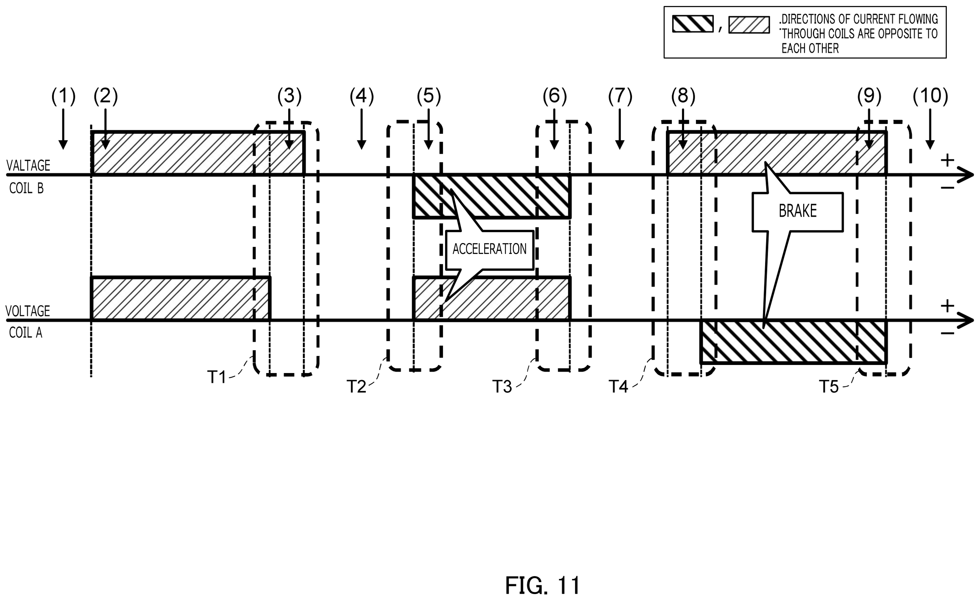

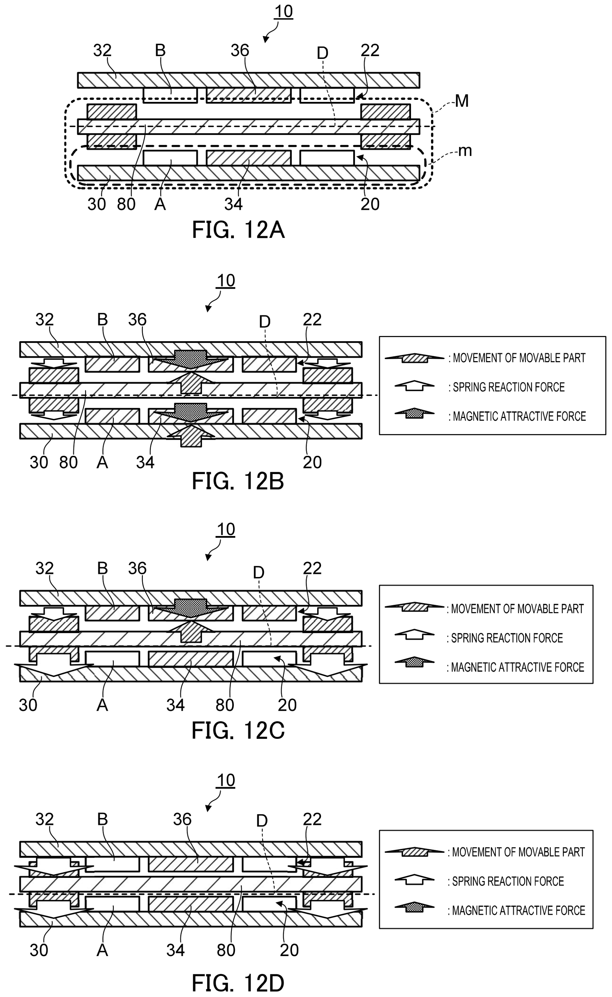

FIG. 11 is a diagram for describing an example of an operation of the vibration actuator corresponding to the operation signal input to the plurality of coils, and FIGS. 12 to 14 are schematic views showing the operation of the vibration actuator corresponding to the operation signal shown in FIG. 11. FIGS. 12 to 14 show the operation of the vibration actuator that is driven at the timing of the input of the operation signal to coil A and coil B shown in FIG. 11 (application of the drive voltage) using the configuration of the principal part shown in FIG. 5. Coils A and B shown in FIG. 11 correspond to coils 50 and 52 of vibration actuator 10 shown in FIGS. 12 to 14.

Specifically, FIGS. 12A to 14B correspond to timings (1) to (10) in FIG. 11 at which the operation signal is input to coils A and B (the drive voltage is applied).

In addition, for coils A and B to which the operation signal (drive voltage) shown in FIG. 11 is input and for coils 50 and 52 of corresponding FIGS. 12 to 14, the state where the current flows through the coil (energized state) is shown by hatching. In addition, in a case where the currents flowing through coils A and B (coils 50 and 52) are opposite to each other in the energized state shown by hatching, coils A and B are shown by changing the orientation of the hatching to correspond to each other. In addition, in FIGS. 12 to 14, the "movements of the movable parts" serving as the movable sections, the reaction forces (referred to as "spring reaction forces") of elastic supporting parts 60 and 62 generated by the movements of the movable parts, and the "magnetic attractive forces" are each indicated by an arrow, and the difference in magnitude is indicated by the size of the arrow. In addition, in FIGS. 12A, 12B, 12C, 12D, 13A, 13B, 13C, 13D, 14A, and 14B, elastic supporting parts 60 and 62 are omitted for convenience.

Vibration actuator 10 described in each of FIGS. 11 to 14 is a vibration actuator in which upper magnetic core 32 is fixed to the touchpad as an object to which the vibration is to be imparted in the vibration presentation apparatus, and is suspended from the lower surface of the touchpad. In addition, coils A and B (coils 50 and 52 of FIGS. 12 to 14) shown in FIG. 11 are not connected to each other, and the drive voltage is applied to each of coils A and B to be controlled independently.

Vibration actuator 10 can drive the movable part by using the reaction force of the elastic supporting parts 60 and 62 in addition to the magnetic attractive forces of the two vibration units. By using the magnetic attractive forces of the two vibration units together with the spring reaction forces, attraction targets can be attracted in the same direction or the attraction can be repelled in the same direction to separate the attraction targets from each other.

In FIG. 11, the non-driven state (state at timing (1)) in which the coil is not energized is a state (non-energized state) of coils A and B indicated by (1). The state of vibration actuator 10 corresponding to the timing (1) is an initial state in which magnetic yoke 80 is positioned at initial position D as shown in FIG. 12A.

In vibration actuator 10 shown in FIG. 12A, the weight of movable part M that is magnetically attracted by the vibration unit having electromagnet part 22 is heavier than the weight of movable part M that is magnetically attracted by the vibration unit having electromagnet part 20 (weight of movable part M > weight of movable part m). Resonance frequency F0 of movable part M and resonance frequency f0 of movable part m may satisfy F0 < f0, or the spring constant may be adjusted to satisfy F0 = f0.

In a case where the current is simultaneously applied in the same direction to both coils A and B of vibration actuator 10 in the initial state (timing (2)), vibration actuator 10 starts the magnetic attraction as shown in FIG. 12B.

In vibration actuator 10 shown in FIG. 12B, the magnetic attractive force is generated in the same direction (here, downward) between each of the vibration units of electromagnet parts 20 and 22 and magnetic yoke 80, and the movable part including magnetic yoke 80 and magnetic core 30 moves to the magnetic core 32 side (see "movement of the movable part"). Along with this movement, the elastic supporting part (not shown) generates a "spring reaction force" that biases downward. That is, the movable part is driven to be attracted to the magnetic core 32 side.

Next, as shown at timing (3), the energization of coils A and B is stopped, and vibration actuator 10 controls the residual vibration of the movable part in a case where the energization of the coils is stopped as shown in FIG. 12C. In this case, in energized state T1 of coils A and B shown in FIG. 11, the energization of coil A is stopped first, and then the energization of coil B is stopped, but the present invention is not limited thereto.

In energized state T1 (also at T2 to T5), it is preferable to adjust the timing in accordance with the movement of the movable part such that the movement of the vibration unit having electromagnet part 22 and the movement of the vibration unit having electromagnet part 20 end at the same time.

In vibration actuator 10, movable part M that is movable by electromagnet part 22 is heavier than movable part m that is movable by electromagnet part 20 (see FIG. 12A). Therefore, in a case where the displacement of movable part M and the displacement of movable part m are the same, movable part M needs to be magnetically attracted for a longer time than movable part m having a lighter weight.

In energized state T1, in order to make the displacement the same, the energization of coil A that magnetically attracts movable part m is stopped first, and the energization of coil B is prolonged to prolong the magnetic attraction time of movable part M. The energization start and stop timings of the coils may be controlled accordingly by adjusting the resonance frequencies such that F0 = f0, and the energization of coils A and B may be simultaneously stopped.

At timing (4), although there is no energization of coils A and B, the movable part (magnetic yoke 80, magnetic core 30, and electromagnet part 20) is overshoot due to inertia even after the voltage application to coils A and B is finished, and as shown in FIG. 12D, the movable part is in a state closest to the magnetic core 32 side. That is, movable part M (see FIG. 12A) that is movable by electromagnet part 22 and movable part m that is movable by electromagnet part 20 below are attracted to the magnetic core 32 side by the magnetic attractive forces and are positioned at the lowest point, and the spring reaction force for each of the movable parts is at a maximum.

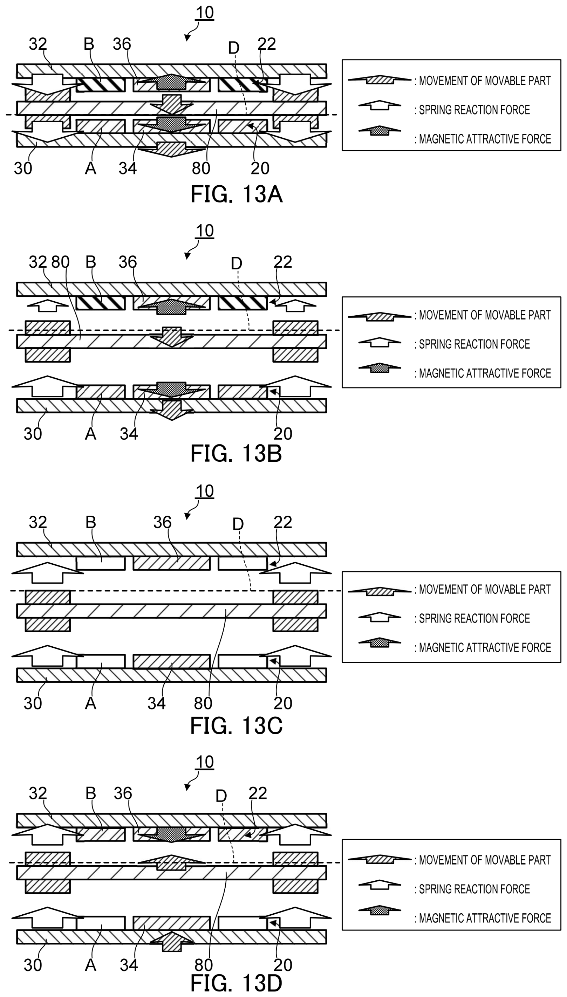

At timing (5), the currents are simultaneously applied in opposite directions to coils A and B to simultaneously drive the plurality of vibration units (corresponding to electromagnet parts 20 and 22) at a time when the spring reaction force is maximum. At timing (5), as shown in FIG. 13A, electromagnet parts 20 and 22 face each other with the same polarity by the energization of coils A and B, and a magnetic repulsive force is generated between electromagnet parts 20 and 22, in addition to the spring reaction force on movable part M.

The movable part (magnetic yoke 80, magnetic core 30, and electromagnet part 20) is controlled (acceleration control) to move downward with acceleration. Specifically, the magnetic repulsive force between electromagnet parts 20 and 22 facing each other with the same polarity is added to the force of downward movement of the movable part by the spring reaction force of the two elastic supporting parts (not shown).

As a result, magnetic yoke 80, magnetic core 30, and electromagnet part 20 move downward, and electromagnet part 20 and magnetic core 30 further move downward from magnetic yoke 80.

At timing (6) in which the energization of coils A and B is stopped, as shown in FIG. 13B, the spring reaction force of the elastic supporting part (not shown) that biases the movable part upward and the magnetic attractive force in the direction of separating from each other are generated in each of the vibration units.

At timing (7) in which the energization of coils A and B is stopped, as shown in FIG. 13C, magnetic yoke 80 and magnetic core 30 are in a state of being most separated from magnetic core 32, and the spring reaction forces of the elastic supporting parts (not shown) that elastically supports magnetic yoke 80 and magnetic core 30 are maximum. That is, in FIG. 13C, the movable part (mainly magnetic core 30) is in a state of overshoot due to inertia, magnetic yoke 80 and magnetic core 30 exceed the initial position, and the elastic supporting parts (springs) are in a state of being completely stretched.

Next, a control is performed to move magnetic yoke 80 and magnetic core 30 to the magnetic core 32 side by the spring reaction force and the magnetic attractive force while applying a brake to the movement. This is a control of generating a vibration different from the free-vibration decay from the state at timing (7), and is a control of imparting a vibration that presents a so-called sharp tactile sensation.

Specifically, in the state shown at timing (7), in order to lift the heavier movable part (the movable part including magnetic yoke 80 and magnetic core 30) first, coil B is energized at timing (8). The energization timings of coils A and B may be controlled in accordance with the adjustments of movable parts M and m and their respective resonant frequencies F0 and f0, and coils A and B may be simultaneously energized. In vibration actuator 10 in the state at timing (8), as shown in FIG. 13D, the magnetic attractive force of electromagnet part 22 generates a force that, together with the spring reaction force, moves magnetic yoke 80 and magnetic core 30 to the magnetic core 32 side (upper side) from the state of FIG. 13C.

Next, the movement and the free vibration of the movable part (magnetic yoke 80, magnetic core 30, and the like) are braked to stop the movement of attracting the movable part to magnetic core 32.

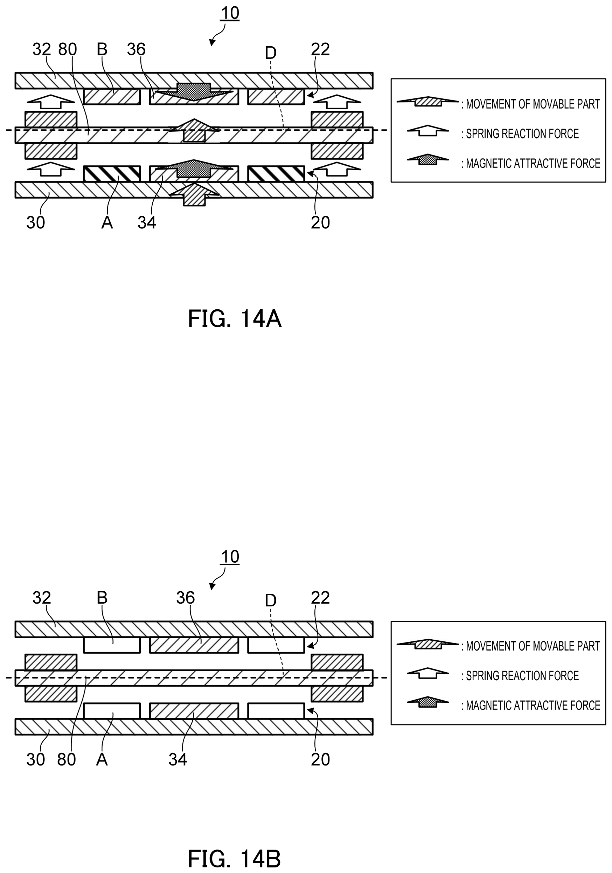

The braking is performed by applying the current to coil A in a direction opposite to the current in coil B as shown at timing (9) to brake the movement of the movable part to the magnetic core 32 side (upper side) as shown in FIG. 14A, that is, a magnetic repulsion brake is applied. As a result, in vibration actuator 10 at timing (10), the movable part that moves upward is suddenly braked, and as shown in FIG. 14B, the movable part is positioned at initial position D without free-vibration decay, and a crisp vibration can be presented.

In each of the vibration units of vibration actuator 10, the plurality of electromagnet parts 20 and 22 respectively including magnetic pole parts 34 and 36 have individual differences (differences in characteristic values) depending on the applied voltage. This case can by addressed by the adjustments of the weights and resonance frequencies F0 and f0 of movable parts M and m shown in FIG. 12A can be made.

<Variation>

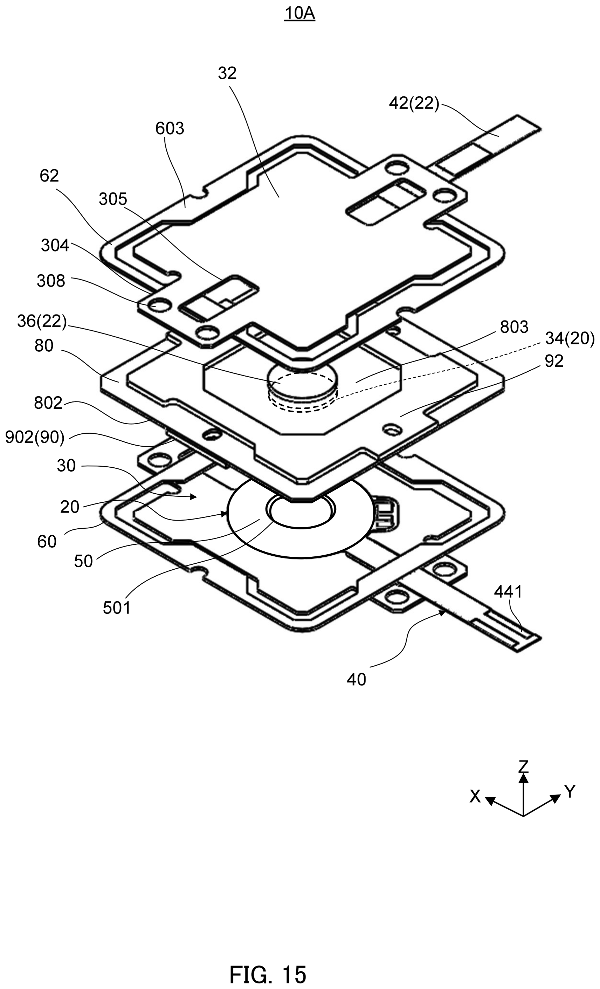

FIG. 15 is a sub-assembly view of a vibration actuator according to a variation of Embodiment 1 of the present invention. FIG. 15 is a view of vibration actuator 10A as viewed from an upper side.

In vibration actuator 10, the plurality of electromagnet parts 20 and 22 are configured to be disposed on magnetic cores 30 and 32, respectively, but the present invention is not limited thereto, and electromagnet parts 20 and 22 may be disposed at any position as long as electromagnet parts 20 and 22 are disposed at positions where electromagnet parts 20 and 22 function.

For example, as in vibration actuator 10A shown in FIG. 15, magnetic pole parts 34 and 36 of electromagnet parts 20 and 22 may be disposed on lower surface 802 and upper surface 803 of magnetic yoke 80 disposed between magnetic cores 30 and 32. Vibration actuator 10A has a configuration in which only the placement positions of magnetic pole parts 34 and 36 are different from those in vibration actuator 10. A view of vibration actuator 10A as viewed from a lower side is the same as FIG. 15, and is a view in which the positions of the components are reversed in the up-down direction in FIG. 15.

That is, in vibration actuator 10A, magnetic core 30 is assembled to weight 90 (see FIG. 5) located on lower surface 802 of magnetic yoke 80 via elastic supporting part 60, and magnetic pole part 34 is disposed to be spaced from magnetic core 30 inside coil 50 of the magnetic core 30 side.

In addition, magnetic core 32 on which board part 42 and the coil (see coil 52 in FIG. 3) are disposed is assembled to weight 90 via elastic supporting part 62, and magnetic pole part 36 is disposed to be spaced from magnetic core 32 inside the coil (not shown) of the magnetic core 32 side.

Referring to FIG. 5, vibration actuator 10A is configured similarly to the vibration actuator 10 shown in FIG. 5, except that magnetic pole parts 34 and 36 are moved in the up-down direction to be disposed on lower surface 802 and upper surface 803 of magnetic yoke 80. As a result, vibration actuator 10A can have the same function as vibration actuator 10.

In addition, with reference to FIG. 5, in vibration actuator 10A, the internal spaces respectively formed between magnetic pole parts 34 and 36 of electromagnet parts 20 and 22 and coils 50 and 52, in the region between the magnetic cores 30 and 32, take on a labyrinthine configuration, meandering in a repeatedly Z-shaped path.

That is, vibration actuator 10A has a configuration in which the inner space between magnetic core 30 and magnetic yoke 80 and the inner space between magnetic yoke 80 and magnetic core 32 take on a labyrinth configuration, and upper and lower surfaces 803 and 802 of magnetic yoke 80 have a labyrinth-shaped air escape portion. As a result, the vibration of vibration actuator 10A during the movement can be attenuated. Vibration actuator 10A can attenuate the vibration more effectively than vibration actuator 10.

(Embodiment 2)

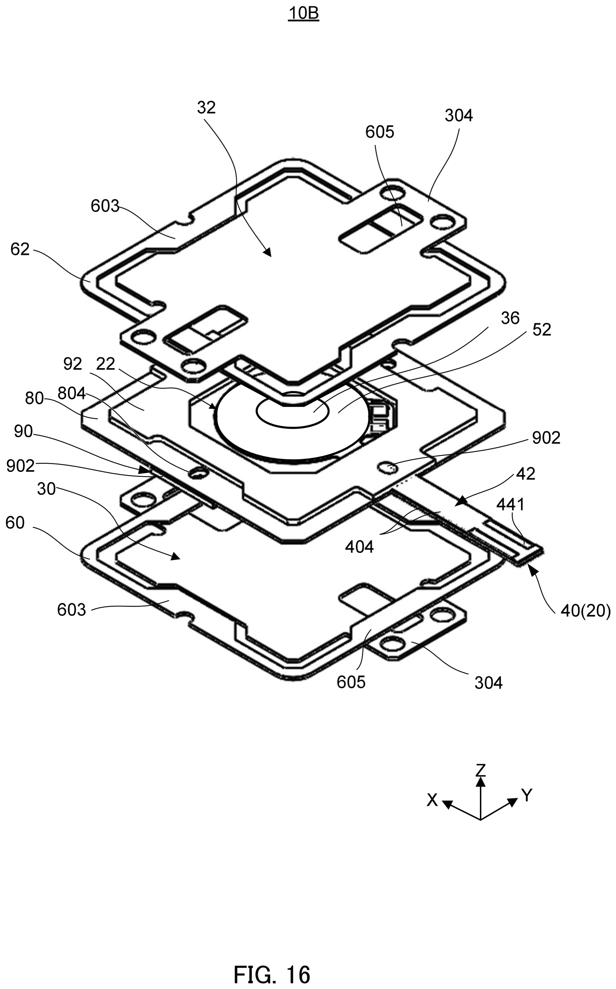

FIG. 16 is a sub-assembly view of a vibration actuator according to Embodiment 2 of the present invention. In the configuration of vibration actuator 10, the plurality of electromagnet parts 20 and 22 are configured to be disposed on magnetic cores 30 and 32 that can function as the fixing parts, but the present invention is not limited thereto.

As shown in vibration actuator 10B shown in FIG. 16, the electromagnet parts may be disposed on the upper and lower surfaces of magnetic yoke 80 that is the movable part. In vibration actuator 10B shown in FIG. 16, elastic supporting part 60 is disposed on magnetic core 30, and core-side connection portions 605 are connected to plate-shaped protruding portions 304 of magnetic core 30.

In addition, in magnetic core 32, core-side connection portions 605 of elastic supporting part 62 are connected to plate-shaped protruding portions 304 of magnetic core 32. Elastic supporting part 60 and elastic supporting part 62 are disposed to face each other, and magnetic yoke 80 is disposed between elastic supporting parts 60 and 62 in which electromagnet parts 20 and 22 and weights 90 and 92 are attached to upper and lower surfaces 803 and 802, respectively.

Electromagnet part 20 (board part 40 and a magnetic pole part and a coil (not shown)) in which the coil (not shown) (corresponding to coil 50 shown in FIGS. 2 and 3) faces downward is attached to the lower surface of magnetic yoke 80. In addition, weight 90 is fixed to extending portion 404 of board part 40 to surround the coil (not shown) on the lower surface. Weight 90 is fixed to movable-part-side connection portions 603 of elastic supporting part 60 together with fixing portions 804 of magnetic yoke 80 via movable-part joining portions 902 that are spaced from each other in the Y-direction.

Electromagnet part 22 (magnetic pole part 36, board part 40, and coil 52) is disposed on upper surface 803 of magnetic yoke 80 at a position overlapping electromagnet part 20 on the lower surface. In this manner, extending portions 404 are disposed to extend to the outside of magnetic yoke 80 in a state of overlapping each other.

Weight 92 is disposed to surround coil 52 in a state of being rotated by 90 degrees with respect to weight 90. Movable-part-side connection portions 603 of elastic supporting part 62 to which magnetic core 32 is fixed are connected to movable-part joining portions 902 of weight 92.

In vibration actuator 10B, the interconnection for coils 50 and 52 can be collectively drawn to the outside from movable magnetic yoke 80 that is disposed at a position sandwiched between magnetic cores 30 and 32.

(Embodiment 3)

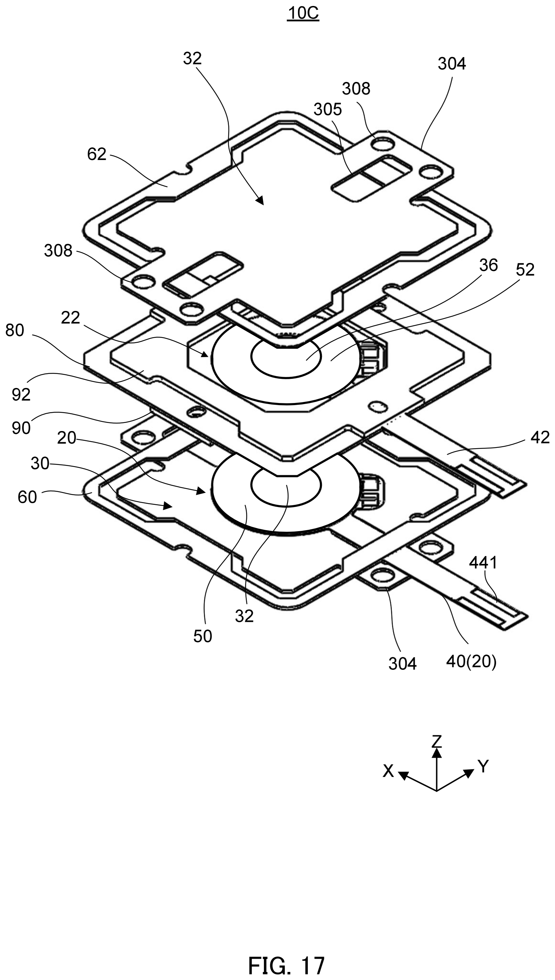

FIG. 17 is a sub-assembly view of a vibration actuator according to Embodiment 3 of the present invention. As shown in vibration actuator 10C shown in FIG. 17, in vibration actuator 10, electromagnet part 22 may be disposed on magnetic yoke 80 instead of magnetic core 32.

In vibration actuator 10C shown in FIG. 17, magnetic yoke 80 that is connected via elastic supporting part 60 and weight 90 to magnetic core 30 on which electromagnet part 20 is disposed is provided. Magnetic pole part 36, board part 42, and coil 52 that are electromagnet part 22 are disposed on the upper surface of magnetic yoke 80. Magnetic pole part 36 faces magnetic core 32 that is disposed to face weight 92 via elastic supporting part 62.

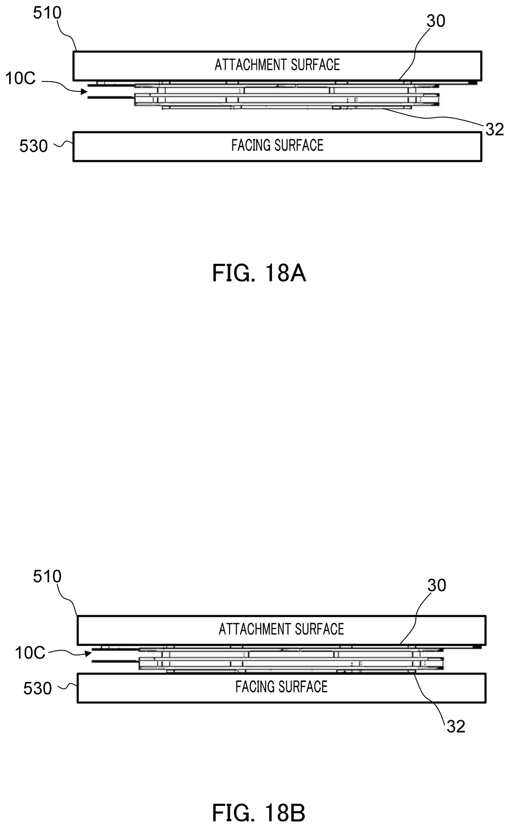

FIGS. 18A and 18B are diagrams showing an attachment state of the vibration actuator to the vibration presentation apparatus, and FIG. 18A is a suspension type in which the vibration actuator is attached in a state of being suspended from the attachment target, and FIG. 18B is a configuration in which the vibration actuator is connected to both the attachment surface of the attachment target and the facing surface.

As shown in FIG. 18A, in a case where vibration actuator 10C is fixed in a suspended state to the attachment target (attachment surface) in the apparatus, a vibration is imparted to the attachment surface by indirect driving. On the other hand, as shown in FIG. 18B, in a case where vibration actuator 10C is disposed to be sandwiched between the attachment surface and the facing surface in the apparatus, the vibration is imparted to the attachment surface directly.

(Embodiment 4)

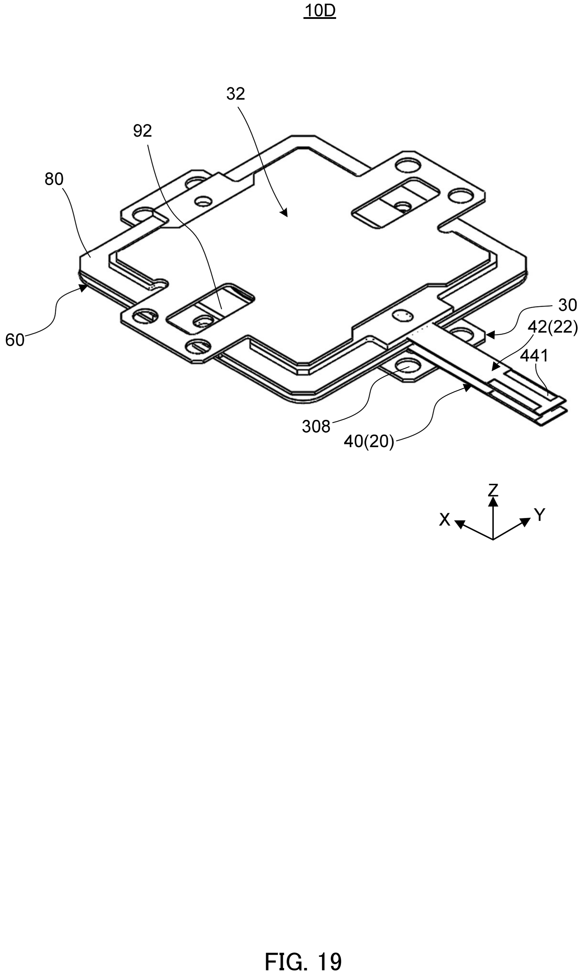

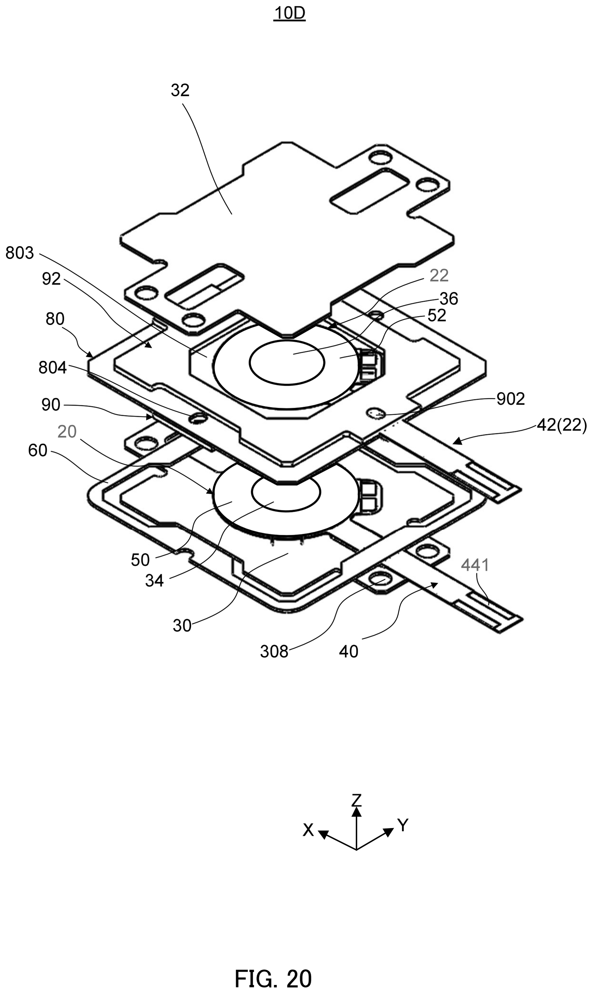

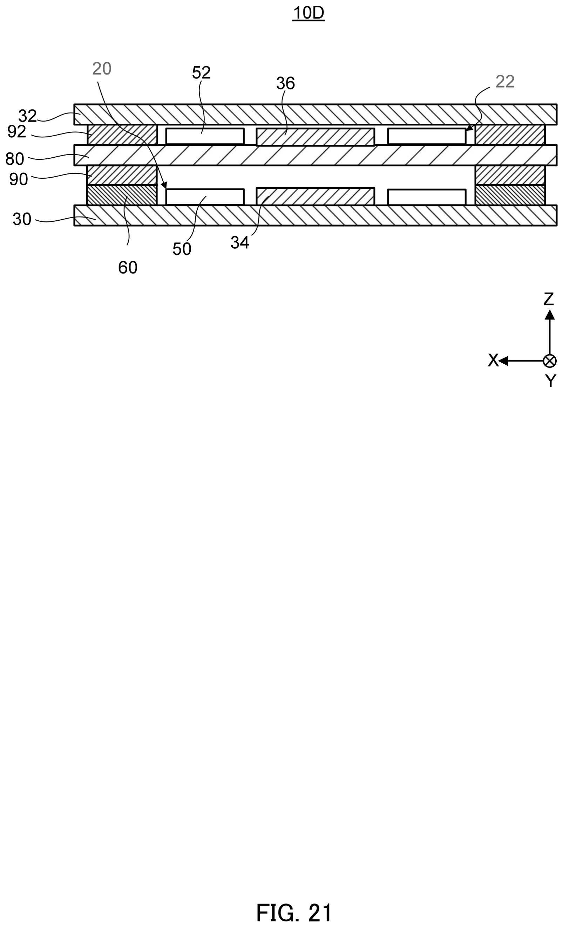

FIG. 19 is an external perspective view of a vibration actuator according to Embodiment 4 of the present invention, and FIG. 20 is a sub-assembly view of the vibration actuator. In addition, FIG. 21 is a schematic sectional view showing a configuration of the principal part of the vibration actuator.

In vibration actuator 10, the configuration including a plurality of elastic supporting parts 60 is adopted, but the present invention is not limited thereto as long as the configuration includes electromagnet parts 20 and 22.

Vibration actuator 10D shown in FIGS. 19 to 21 has the same basic configuration as vibration actuator 10, but has a configuration in which one elastic supporting part includes a plurality of electromagnet parts 20 and 22.

Vibration actuator 10D has the same configuration as vibration actuator 10 up to magnetic core (first planar body) 30, elastic supporting part 60, electromagnet part 20, weight 90, and magnetic yoke (third planar body) 80, but has a different stacked structure above these components.

Electromagnet part 22, that is, board part 42, magnetic pole part 36, and coil 52 are disposed on upper surface 803 of magnetic yoke 80, and weight 92 is disposed to surround coil 52.

Weight 92 is fixed via movable-part joining portions 902 to magnetic yoke 80 at a position rotated by 90 degrees with respect to weight 90.

Magnetic core 32 is fixed to weight 92 in a stacked state.

In this configuration, magnetic core 30 serves as the fixing part, and magnetic core 30 is attached to the attachment surface that is the attachment target. Electromagnet part 22 functions as a movable part that is connected to magnetic core 30 via elastic supporting part 60 in addition to magnetic yoke 80, magnetic core 32, and weights 90 and 92. As a result, the weight of the movable part can be increased, and the high vibration can be realized since the movable part is driven by two electromagnet parts 20 and 22. In addition, since single elastic supporting part 60 is provided, the cost can be reduced. Magnetic core 32 of vibration actuator 10D may be used upside down with respect to magnetic core 30. In addition, magnetic core 32 may be configured to be attached to magnetic yoke 80 by rotating 90 degrees together with weight 90.

(Embodiment 5)

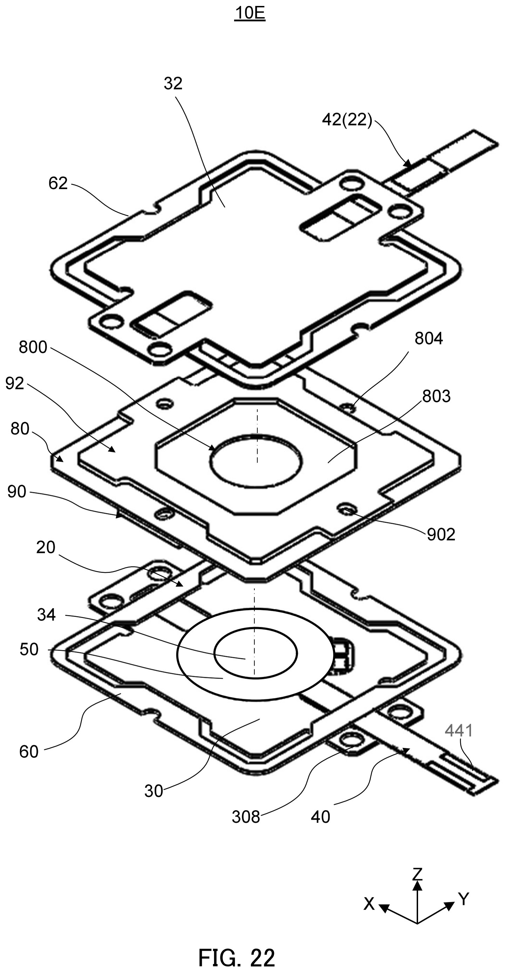

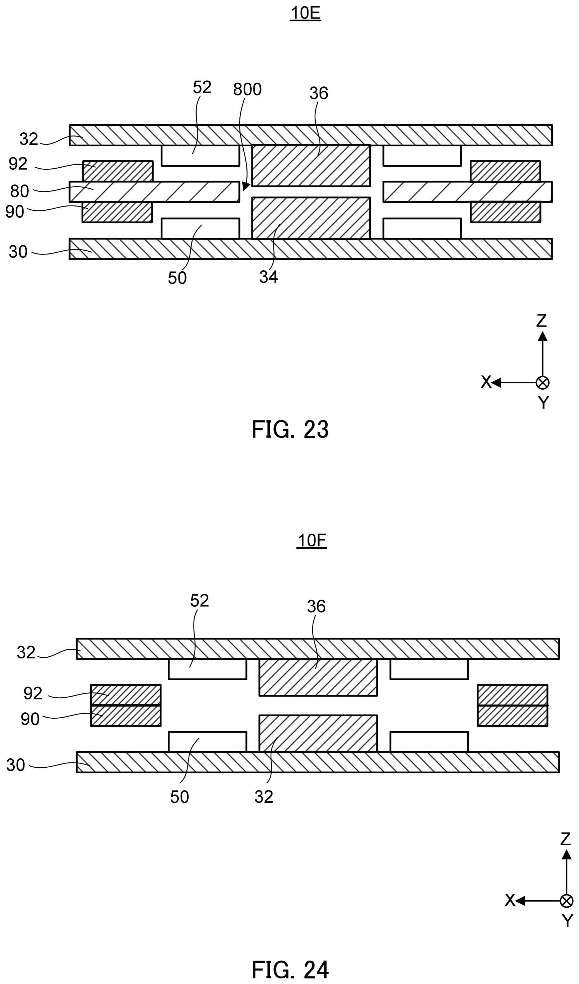

FIG. 22 is a sub-assembly view of a vibration actuator according to Embodiment 5 of the present invention, and FIG. 23 is a schematic sectional view showing a configuration of the principal part of the vibration actuator according to Embodiment 5 of the present invention.

In the configuration of vibration actuator 10, for example, an air hole that communicates between, on one hand, the inner space between magnetic core 30 and magnetic yoke 80 and, on the other hand, the inner space between magnetic yoke 80 and magnetic core 32 may be formed.

Vibration actuator 10E shown in FIGS. 22 and 23 has a configuration in which opening portion 800 is formed in a center portion of magnetic yoke 80 in the configuration of vibration actuator 10.

Since opening portion 800 is formed at the center, the heights of magnetic pole parts 34 and 36 that are disposed to face each other above and below magnetic yoke 80 can be increased, and the gap can be shortened by disposing magnetic pole parts 34 and 36 to approach each other through opening portion 800, and the magnetic attraction or repulsion force can be increased. In addition, a drive region of the movable part can be secured.

In a case where magnetic yoke 80 is a non-magnetic body and a non-magnetic yoke is used unlike a structure in which magnetic yoke 80 is a magnetic body and a magnetic attraction is generated, the magnetic flux can perform magnetic attraction or repulsion between the magnetic poles of the facing surfaces of magnetic pole parts 34 and 36 without passing through the non-magnetic yoke, to drive the movable part. In addition, by using the magnetic repulsion of magnetic pole parts 34 and 36, the initial movement direction is changed, the timing of the drive control is advanced, and the sharpness of the tactile sensation can be increased. This configuration can also be applied to the vibration actuator of the other embodiments formed in the same manner.

FIG. 24 is a schematic sectional view showing a configuration of the principal part of a vibration actuator according to Embodiment 6 of the present invention. The configuration of vibration actuator 10, except that for example, magnetic yoke 80 is removed may be adopted.

Vibration actuator 10F shown in FIG. 24 has a configuration in which magnetic yoke 80 is removed from the configuration of vibration actuator 10, and weights 90 and 92 fixed to the upper and lower surfaces of magnetic yoke 80 are fixed to and integrated with each other.

In vibration actuator 10F, weights 90 and 92 that are connected respectively to magnetic cores 30 and 32 via the elastic supporting parts (not shown) interposed between the weights and magnetic cores 30 and 32 are integrally disposed, and one of the weights is movable by the magnetic attraction or repulsion force between magnetic cores 30 and 32.

Vibration actuators 10 and 10A to 10E can be connected to the vibration presentation section that receives the pressing operation of the user via one of magnetic core 30 and magnetic core 32 on which electromagnet part 20 is disposed.

In addition, since the plurality of movable components are provided and the movable part weight can be efficiently increased while members to be used are shared in common, the movable part weight can be secured without using the high specific gravity material, and the cost can be reduced.

The vibration actuator controls the movement of the plurality of movable sections (magnetic yoke 80 and magnetic core 32) by using the plurality of electromagnet parts 20 and 22. The movement direction can be changed by adjusting the application direction to the plurality of coils 50 and 52 or the winding direction of coils 50 and 52 to use the magnetic field repulsion.

As described above, vibration actuator 10 is formed in a flat plate shape, and one of electromagnet part 20 and the movable part serves as the movable part, and the other serving as the fixing part is moved in one direction of the stacking direction (thickness direction) to approach each other. In addition, vibration actuator 10 generates the vibration by moving the both away from each other in the opposite direction by the reaction force of elastic supporting part 60.

Vibration actuator 10 vibrates the attachment surface of the attachment target object that is an operation surface operated by the user, such as a touch panel, and the attachment surface is attached to a product housing to be capable of vibrating.

<Drive Principle of Vibration Actuator 10>

Hereinafter, a driving principle of vibration actuator 10 will be described briefly. Vibration actuator 10 can also be driven by generating a resonance phenomenon with a pulse using the following motion equation and circuit equation. The operation is not resonance driving, but is to express the operational feel on the trackpad (see FIG. 25) as vibration presentation apparatus 500, and is driven, for example, by inputting a current pulse (a single pulse or a plurality of pulses) via a control part (not shown). Additionally, vibration actuator 10 may be configured such that, as energization of coil 50 via the control part, power is supplied from an alternating current power source and a Sine wave or Cosine wave voltage is input to coil 50, thereby vibrating the movable part. It is preferable that an alternating current voltage is applied to vibration actuator 10, and vibration actuator 10 to which a sine wave-shaped drive signal is input generates the vibration.

In vibration actuator 10, in a case where electromagnet part 20 is a fixing surface for fixation to the housing and all the members supported to be movable with respect to the fixing surface are the movable part, the movable part performs a reciprocating motion based on Expressions 1 and 2. In a case where electromagnet part 20 is the movable part and the movable part includes the fixing surface and is fixed to the housing at the fixing surface, the reciprocating motion is performed while satisfying the same Expressions 1 and 2 with replacement of the movable target.

[1]

$$m \, \frac{d^2 x(t)}{dt^2} = K_f \, i(t) - K_{sp} x(t) - D \, \frac{dx(t)}{dt} \qquad \dots \text{(Expression 1)}$$

m: mass [kg]
x(t): displacement [m]
$K_f$: thrust constant [N/A]
i(t): current [A]
$K_{sp}$: spring constant [N/m]
D: damping coefficient [N/(m/s)]

[2]

$$e(t) = R \, i(t) + L \, \frac{di(t)}{dt} + K_e \, \frac{dx(t)}{dt} \qquad \dots \text{(Expression 2)}$$

e(t): voltage [V]
R: resistance [Ω]
L: inductance [H]
$K_e$: reverse electromotive force constant [V/(rad/s)]

That is, the mass m [kg], the displacement x(t) [m], the thrust constant $K_f$ [N/A], the current i(t) [A], the spring constant $K_{sp}$ [N/m], the damping coefficient D [N/(m/s)], and the like in vibration actuator 10 can be appropriately changed within a range satisfying Expression 1. In addition, the voltage e(t) [V], the resistance R [Ω], the inductance L [H], and the reverse electromotive force constant $K_e$ [V/(rad/s)] can be appropriately changed within a range satisfying Expression 2.

As described above, the vibration of vibration actuator 10 is determined by the mass m of the movable part and the spring constant $K_{sp}$ of a metal spring (leaf spring in the present embodiment) as elastic supporting part 60. In addition, the vibration generated by vibration actuator 10 can be set and changed by the input voltage (for example, the pulse, the sine wave-shaped voltage, or the cosine wave-shaped voltage).

The actuator drive signal corresponds to the drive current pulse (also referred to as a "current pulse") supplied to coil 50 as the drive current that drives the movable part and operation equipment in the embodiments. In vibration actuator 10, in a case where the current pulse is supplied to coil 50, the movable part is moved in one direction to the electromagnet part 20 side by the magnetic attractive force between electromagnet part 20 and the movable part, and is mechanically displaced, and the supply is stopped and then the free vibration is caused. The vibration generated in this way is imparted to the operation equipment. Elastic supporting part 60 can control the displacement and the free vibration period by the magnetic attractive force.

Further, the actuator drive signal is generated by inputting a signal from a detection section that detects an operator's operation. As the detection section, for example, a pressure sensitivity sensor that detects pressing by the operator as a pressure signal, converts the pressure signal into an electrical signal, and outputs the signal may be used. Further, the detection section may be of a capacitive type, or may be a proximity sensor or the like that detects the position of the operator's finger (pressing object) pressing the vibration presentation section by detecting capacitive coupling between the finger and the sensor.

For example, in a case where vibration actuator 10 is used in the vibration presentation apparatus, it is desired to impart a crisp suitable tactile sensation and force sensation in a case where the vibration is generated to impart the touch operational feel in a case where the operator performs the touch operation by operating the operation equipment. To this end, in vibration actuator 10, the air escape portion is provided to improve the tactile sensation and the force sensation, and the vibration damping after the driving is enhanced. As a result, vibration ring-down after the vibration has been generated (also referred to as "residual vibration") is suppressed, the strength of the tactile sensation becomes more distinct, and a crisp tactile sensation can be provided.

In addition, in each of vibration actuators 10A to 10F, the vibration amplitude of a magnetic member or a core portion by the electromagnet part in the space formed between the magnetic core or the magnetic yoke (first and second planar bodies or the third planar body) is defined by the spring constant of the elastic supporting part. The vibration amplitude of the magnetic member or the core portion in the space formed between the electromagnet part and the magnetic member or the core portion is defined by the thickness of an elastic body.

In addition, in vibration actuators 10, 10A to 10F, whether magnetic cores 30 and 32 are the fixing part or the movable part is determined by the magnetic core fixed to the housing, so that either may be the fixing part or the movable part. In addition, magnetic cores 30 and 32 may be fixed to both the attachment surface and the facing surface, or may be attached to be suspended from the attachment surface. In addition, the type and the timing of the drive signal to each of coils 50 and 52 can be appropriately changed, and the vibration can be attenuated or amplified to continue the vibration. As a result, vibration actuators 10, 10A to 10F can output suitable various vibrations to impart a wide variety of operational feels, while achieving thinning.

In addition, in each of the vibration actuators, in a case where the elastic body (plate-shaped elastic portion) is a rectangular frame-shaped elastic body (frame body) as in vibration actuator 10 of the embodiment, the elastic body may support the core portion at one pair of opposite sides and may be connected to the magnetic yoke at the other pair of opposite sides. That is, the first planar body and the third planar body may be connected via the elastic supporting part to each other at portions shifted by 90°.

<Vibration Presentation Apparatus (Contact Type Input Apparatus) 500>

FIG. 25 is a diagram for describing an operation of the vibration presentation apparatus including the vibration actuator, and FIG. 26 is a diagram showing a variation of the vibration presentation apparatus including the vibration actuator.

Vibration presentation apparatus 500 is, for example, a trackpad as a pointing apparatus used instead of a mouse in a notebook computer or the like.

The trackpad as vibration presentation apparatus 500 is disposed in rectangular opening portion 540 provided in a housing of the notebook computer or the like. The trackpad includes plate-shaped pad body 510 that is touched with a finger in a touch operation, vibration actuator 10 disposed on a back surface of pad body 510, and frame portion 520 that defines opening portion 540 surrounding vibration actuator 10.

In a case where pad body 510 is touched with a finger or tapped in a touch operation, vibration actuator 10 imparts the vibration causing a tactile sensation. Vibration actuator 10 may be changed to any of vibration actuators 10A to 10F.

In vibration actuator 10 of the trackpad, magnetic core 32 is attached to the back surface of pad body 510, and pad body 510 is directly driven to impart the vibration to the operator. Specifically, as shown in FIGS. 25 and 26, the back surface, which serves as the fixing surface, of magnetic core 30 is fixed to bottom surface portion 530 of opening portion 540 of the housing, and the movable part is fixed to the back surface of pad body 510. Pad body 510 is disposed to close opening portion 540 at an upper portion of opening portion 540. Pad body 510 is supported by frame portion 520 that denies the housing via cushioning material 550.

Pad body 510 is fixed to the movable part via a double-sided tape or the like as a fixing material. In addition, in the configuration of vibration presentation apparatus 500, vibration actuator 10 may be attached to indirectly drive pad body 510 via magnetic core 32 to impart the vibration. The movable part including magnetic core 32 may be moved as a result of a touch operation performed, such as touching or tapping pad body 510 with a finger, and the vibration may be generated in this way.

In a case where pad body 510 is touched with a finger or tapped in a touch operation, a pressure-sensitive sensor (detection section) (not shown) that senses the operation may drive vibration actuator 10 based on a signal from the pressure-sensitive sensor.

Specifically, in vibration presentation apparatus 500, in a case where pad body 510 of the trackpad is operated by being pressed by a fingertip or the like of the operator, vibration actuator 10 is driven and vibrates in response to the operation. The tactile sensation is imparted to the operator by the vibration. For example, in the case of an operation of pressing a switch, a sense of pressing the switch can be provided.

In addition, since vibration actuator 10 is disposed on the back surface of pad body 510, the vibration can be directly imparted to present an excellent tactile sensation. In addition, since vibration actuator 10 is a thin flat plate shape, vibration actuator 10 does not occupy a wide placement space in vibration presentation apparatus (contact type input apparatus) 500 in which vibration actuator 10 is mounted, and the designability of the contact type input apparatus can be improved.

In a case where electronic equipment including a trackpad is provided with a display such as a liquid crystal display, vibration actuator 10 may give various kinds of tactile sensations to the trackpad depending on display images operated by the operator. For example, vibration actuator 10 may generate vibration so as to give a tactile sensation of a mechanical switch corresponding to an image that is a target to be touched and operated. The mechanical switch is, for example, a tactile switch, an alternate switch, a momentary switch, a toggle switch, a slide switch, a rotary switch, a DIP switch, a rocker switch, or the like. Further, a push-type switch can give tactile sensations of the switch different depending on the degree of depression.

As described above, vibration presentation apparatus 500 of the present embodiment realizes a realistic tactile sensation such as a tactile sensation of a switch by a realistic tactile sensation expression based on load detection. Vibration actuators 10A to 10F are driven by the same driving principle as vibration actuator 10.

In vibration presentation apparatus 500, vibration actuator 10 is disposed between pad body 510 and bottom surface portion 530, and the vibration is imparted by so-called direct driving in which magnetic cores 32 and 30 are attached to each of pad body 510 and bottom surface portion 530, but the present invention is not limited thereto. A configuration may be adopted in which one of magnetic cores 30 and 32 is fixed to the back surface of pad body 510 to be suspended and the vibration is imparted by indirect driving.

In vibration presentation apparatus 500, a configuration advantageous to a corner portion of the touchpad is achieved. For example, in a case where the vibration actuator is attached to the center of the back surface of pad body 510, applying a load at the most distant location-such as at the corner portion of the attachment surface-imposes the greatest torsional load on the elastic supporting part (spring). Thus, with the increase in torsional rigidity, pad body 510 can be depressed while remaining parallel to bottom surface portion (facing surface) 530, thereby reducing in-plane variations in tactile sensation.

Industrial Applicability

The vibration actuator and the vibration presentation apparatus according to the present invention have an effect of outputting suitable various vibrations to impart a wide variety of operational feels while achieving thinning, and are useful, for example, as those used in a PCB, a trackpad, an operation panel, and the like.

Reference Signs List

    10, 10A, 10B, 10C, 10D, 10E, 10F Vibration actuator
    20, 22 Electromagnet part

30 Magnetic core (first planar body)
32 Magnetic core (second planar body)
34, 36 Magnetic pole part
40, 42 Board part
50, 52 Coil
60, 62 Elastic supporting part
80 Magnetic yoke (third planar body)
90 Weight (first weight)
92 Weight (second weight)
302 Cutout portion
304 Plate-shaped protruding portion
305 Window portion
308 Fixing hole
402 Board body
403, 501, 540, 601, 800 Opening portion
404 Extending portion
441 Land
500 Vibration presentation apparatus
510 Pad body
520 Frame portion
530 Bottom surface portion
550 Cushioning material
603 Movable-part-side connection portion
604 Side portion
605 Core-side connection portion (connection piece)
607 Positioning portion
802 Lower surface
804, 806 Fixing portion
902 Movable-part joining portion
904 Recessed portion

**Claims**

1. A vibration actuator, comprising:

   a first planar body (30) and a second planar body (32) that are magnetic bodies and are disposed to face each other;
   a third planar body (80) that is disposed between the first planar body (30) and the second planar body (32) and includes a magnetic body;
   a plate-shaped electromagnet part (20) that includes a magnetic pole part (34), a flat plate-shaped coil (50) surrounding the magnetic pole part (34), and a board part (40) connected to the flat plate-shaped coil (50), and that is disposed on one planar body (30) of the first planar body (30) and the third planar body (80) to face an other planar body (80) of the first planar body (30) and the third planar body (80);
   another electromagnet part (22) that is configured in the same manner as the plate-shaped electromagnet part (20) and is disposed on one planar body (32) of the second planar body (32) and the third planar body (80) to face an other planar body (80) of the second planar body (32) and the third planar body (80); and
   an elastic supporting part (60) that supports the third planar body (80) with respect to the first planar body (30) such that the third planar body (80) is movable in a facing direction, wherein
   at least two of the first planar body (30), the second planar body (32), and the third planar body (80) are displaced to approach each other and vibrate by a magnetic force generated by energization of a plurality of the flat plate-shaped coils (50, 52).

2. The vibration actuator according to claim 1, further comprising:

   another elastic supporting part that supports the third planar body with respect to the second planar body such that the third planar body is movable in the facing direction, wherein
   the plate-shaped electromagnet part is fixed to the first planar body, and the other electromagnet part is fixed to the second planar body.

3. The vibration actuator according to claim 2, wherein:

the third planar body includes:

a rectangular plate-shaped yoke (80), and
a plurality of weights (90, 92) placed on upper and lower surfaces of the plate-shaped yoke, and

the plurality of weights are connected respectively to the elastic supporting part and the other elastic supporting part to be movable in the facing direction by deformation of the elastic supporting part and the other elastic supporting part.

4. The vibration actuator according to claim 3, wherein:

the elastic supporting part (60) is a rectangular frame body surrounding the first planar body, is connected to the first planar body (30) by a pair of connection pieces (605) protruding inward from opposite sides (604) of the rectangular frame body, and is connected to other opposite sides (602) in a state where a first weight (90) among the plurality of weights (90, 92) which is placed on a lower surface of the plate-shaped yoke (80) is suspended from the other opposite sides (602), and
the other elastic supporting part (62) is formed in the same manner as the elastic supporting part (60) and is connected to a second weight (92) by connection pieces of opposite sides that are spaced apart from each other in an orthogonal direction with respect to the first weight (90), the second weight (92) being placed on an upper surface of the plate-shaped yoke (80).

5. A vibration presentation apparatus, comprising:
the vibration actuator according to claim 1 disposed on a back surface of an operation surface and driven in response to an operation on the operation surface.

10

FIG. 1

<u>10</u>

FIG. 2

10

42

32

62    603

308

92    902

80    803

804

50

501

806

40    802

402

403

90    902

60    601    904

605    603

604    602

602    604

603    665

607

305    30

304

302    308

Z

X    Y

FIG. 3

FIG. 4

ATTACHMENT SURFACE

FACING SURFACE

EP 4 769 916 A1

FIG. 5

FIG. 6

FIG. 7

MAGNETIC FIELD DIRECTION    52    803    36    MOVEMENT DIRECTION

32    92    80    90    30    802    50    34

FIG. 8

MAGNETIC FIELD DIRECTION    52    803    36    MOVEMENT DIRECTION

32    92    80    90    30    802    50    34

FIG. 9

VOLTAGE

CURRENT

DISPLACEMENT

WEAK FEEL

MAGNETIC ATTRACTION    SPRING REACTION FORCE

FIG. 10A

t1    t2

STRONG FEEL

MAGNETIC ATTRACTION    AMPLITUDE MAXIMIZATION

FIG. 10B

RESIDUAL VIBRATION

FIG. 10C

FIG. 11

FIG. 12A

FIG. 12B

FIG. 12C

FIG. 12D

FIG. 13A

FIG. 13B

FIG. 13C

FIG. 13D

EP 4 769 916 A1

FIG. 14A

FIG. 14B

30

10A

FIG. 15

10B

FIG. 16

10C

FIG. 17

510

30

10C

ATTACHMENT SURFACE

32

530

FACING SURFACE

FIG. 18A

510

30

10C

ATTACHMENT SURFACE

530

FACING SURFACE

32

FIG. 18B

10D

FIG. 19

10D

FIG. 20

10D

FIG. 21

10E

FIG. 22

10E

FIG. 23

10F

FIG. 24

500

FIG. 25

FIG. 26

Europäisches
Patentamt
European
Patent Office
Office européen
des brevets

**EUROPEAN SEARCH REPORT**

Application Number

EP 25 22 6780

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2016/154752 A1 (7725965 CANADA INC [CA]) 6 October 2016 (2016-10-06) | 1,2,5 | INV. H02K33/04 G06F3/01 |
| Y | * abstract; figures 1A-1D,8 * | 3 | |
| A | * paragraphs [0002], [0004], [0010], [0028], [0029], [0049], [0051] * * claims 1,5-7 * | 4 | |
| | ----- | | |
| Y | EP 3 846 326 A1 (MINEBEA MITSUMI INC [JP]) 7 July 2021 (2021-07-07) | 3 | |
| A | * abstract; figure 11 * * paragraphs [0033], [0034] * | 1,2,4,5 | |
| | ----- | | |
| A | US 2019/044425 A1 (ZU FENGLEI [CN] ET AL) 7 February 2019 (2019-02-07) * abstract; figures 1,2 * * paragraphs [0049], [0070] * * claim 1 * | 1-5 | |
| | ----- | | |

TECHNICAL FIELDS
SEARCHED (IPC)

G06F

The present search report has been drawn up for all claims

| Place of search | Date of completion of the search | Examiner |
|---|---|---|
| Munich | 19 March 2026 | Pfaffelhuber, Thomas |

EPO FORM 1503 03.82 (P4C01)

## ANNEX TO THE EUROPEAN SEARCH REPORT
## ON EUROPEAN PATENT APPLICATION NO.

EP 25 22 6780

This annex lists the patent family members relating to the patent documents cited in the above-mentioned European search report.
The members are as contained in the European Patent Office EDP file on
The European Patent Office is in no way liable for these particulars which are merely given for the purpose of information.

19-03-2026

| Patent document cited in search report | | Publication date | Patent family member(s) | | Publication date |
|---|---|---|---|---|---|
| WO 2016154752 | A1 | 06-10-2016 | NONE | | |
| EP 3846326 | A1 | 07-07-2021 | CN | 112640275 A | 09-04-2021 |
| | | | CN | 114337177 A | 12-04-2022 |
| | | | CN | 114337178 A | 12-04-2022 |
| | | | CN | 114337179 A | 12-04-2022 |
| | | | CN | 119729305 A | 28-03-2025 |
| | | | CN | 119767221 A | 04-04-2025 |
| | | | EP | 3846326 A1 | 07-07-2021 |
| | | | EP | 4631630 A2 | 15-10-2025 |
| | | | JP | 6717478 B1 | 01-07-2020 |
| | | | JP | 6750825 B2 | 02-09-2020 |
| | | | JP | 6753571 B2 | 09-09-2020 |
| | | | JP | 6923279 B2 | 18-08-2021 |
| | | | JP | 6927539 B2 | 01-09-2021 |
| | | | JP | 6978139 B2 | 08-12-2021 |
| | | | JP | 6978140 B2 | 08-12-2021 |
| | | | JP | 6993532 B2 | 13-01-2022 |
| | | | JP | 6993533 B2 | 13-01-2022 |
| | | | JP | 6993534 B2 | 13-01-2022 |
| | | | JP | 7225357 B2 | 20-02-2023 |
| | | | JP | 7529825 B2 | 06-08-2024 |
| | | | JP | 2020108891 A | 16-07-2020 |
| | | | JP | 2020108892 A | 16-07-2020 |
| | | | JP | 2020168632 A | 15-10-2020 |
| | | | JP | 2020168633 A | 15-10-2020 |
| | | | JP | 2021169096 A | 28-10-2021 |
| | | | JP | 2021178326 A | 18-11-2021 |
| | | | JP | 2021178327 A | 18-11-2021 |
| | | | JP | 2021178328 A | 18-11-2021 |
| | | | JP | 2021181092 A | 25-11-2021 |
| | | | JP | 2022022372 A | 03-02-2022 |
| | | | JP | 2023052967 A | 12-04-2023 |
| | | | JP | 2024133415 A | 01-10-2024 |
| | | | JP WO2020045470 A1 | | 03-09-2020 |
| | | | KR | 20210046682 A | 28-04-2021 |
| | | | TW | 202033283 A | 16-09-2020 |
| | | | US | 2021328491 A1 | 21-10-2021 |
| | | | US | 2022123639 A1 | 21-04-2022 |
| | | | US | 2022123640 A1 | 21-04-2022 |
| | | | US | 2022123641 A1 | 21-04-2022 |
| | | | US | 2022123642 A1 | 21-04-2022 |
| | | | US | 2024275249 A1 | 15-08-2024 |
| | | | WO | 2020045470 A1 | 05-03-2020 |
| US 2019044425 | A1 | 07-02-2019 | CN | 105529896 A | 27-04-2016 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 25 22 6780

This annex lists the patent family members relating to the patent documents cited in the above-mentioned European search report.
The members are as contained in the European Patent Office EDP file on
The European Patent Office is in no way liable for these particulars which are merely given for the purpose of information.

19-03-2026

| Patent document cited in search report | Publication date | Patent family member(s) | | Publication date |
|---|---|---|---|---|
| | | US | 2019044425 A1 | 07-02-2019 |
| | | WO | 2017133152 A1 | 10-08-2017 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015070729 A